(19) **Europäisches Patentamt / European Patent Office / Office européen des brevets**

(11) **EP 2 656 534 B1**

(12) **FASCICULE DE BREVET EUROPEEN**

(45) Date de publication et mention de la délivrance du brevet:
**10.09.2014 Bulletin 2014/37**

(21) Numéro de dépôt: **11797336.2**

(22) Date de dépôt: **21.12.2011**

(51) Int Cl.:
**H04L 9/08** (2006.01)  **H04L 9/32** (2006.01)

(86) Numéro de dépôt international:
**PCT/EP2011/073521**

(87) Numéro de publication internationale:
**WO 2012/085037 (28.06.2012 Gazette 2012/26)**

(54) **PROCÉDÉ D'AUTHENTIFICATION MULTIMODALE ET GÉNÉRATION DE CLÉ CRYPTOGRAPHIQUE UTILISANT LES SECURE SKETCHES GÉNÉRALISES**

VERFAHREN ZUR MULTIMODALEN AUTHENTIFIZIERUNG UND ERZEUGUNG EINES KRYPTOGRAFISCHEN SCHLÜSSELS ANHAND VON SICHEREN GENERALISIERTEN SKIZZEN

METHOD FOR MULTIMODAL AUTHENTICATION AND THE GENERATION OF A CRYPTOGRAPHIC KEY, USING GENERALISED SECURE SKETCHES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1005117**
**24.02.2011 FR 1100552**

(43) Date de publication de la demande:
**30.10.2013 Bulletin 2013/44**

(73) Titulaire: **Thales**
**92200 Neuilly-sur-Seine (FR)**

(72) Inventeurs:
• **MARCELLO, Sandra**
**F-92704 Colombes Cedex (FR)**
• **DELORME-GUILLON, Gaëtan**
**F- 50100 CHERBOURG (FR)**
• **CAPMAN, François**
**F-92704 Colombes Cedex (FR)**
• **SALIBA, Eric**
**F-92704 Colombes Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **STELVIO CIMATO ET AL: "Privacy-Aware Biometrics: Design and Implementation of a Multimodal Verification System", COMPUTER SECURITY APPLICATIONS CONFERENCE, 2008. ACSAC 2008. ANNUAL, IEEE, PISCATAWAY, NJ, USA, 8 décembre 2008 (2008-12-08), pages 130-139, XP031376769, ISBN: 978-0-7695-3447-3**
• **YEVGENIY DODIS ET AL: "Fuzzy Extractors: How to Generate Strong Keys from Biometrics and Other Noisy Data", INTERNET CITATION, 1 janvier 2008 (2008-01-01), XP007905694, Extrait de l'Internet: URL:http://www.cs.bu.edu/~reyzin/papers/fu zzy.pdf [extrait le 2008-09-18]**
• **YEVGENIY DODIS ET AL: "Robust Fuzzy Extractors and Authenticated Key Agreement from Close Secrets", 1 janvier 2006 (2006-01-01), ADVANCES IN CRYPTOLOGY - CRYPTO 2006 LECTURE NOTES IN COMPUTER SCIENCE;; LNCS, SPRINGER, BERLIN, DE, PAGE(S) 232 - 250, XP019041954, ISBN: 978-3-540-37432-9 alinéa [0002] - alinéa [0004]**
• **KRAWCZYK H: "On Extract-then-Expand Key Derivation Functions and an HMAC-based KDF", 20080310 , 10 mars 2008 (2008-03-10), pages 1-37, XP007919541, Extrait de l'Internet: URL:http://webee.technion.ac.il/~hugo/kdf/ kdf.pdf**

**Description**

La présente invention concerne un procédé d'authentification multimodale utilisant notamment des systèmes possédant une phase d'enrôlement et une phase de recouvrement plus connus sous l'expression anglo-saxonne « secure sketches généralisés » (brevet FR 09 /03699).

L'invention s'applique notamment dans les domaines d'authentification des personnes ou des supports, tels que des composants électroniques, des étiquettes, etc. Elle est utilisée dans tous les domaines mettant en oeuvre des techniques d'extraction de données à partir de données floutées.

Elle trouve son application pour l'authentification de constituants physiques d'équipements, la détection d'une substitution d'un composant, d'une altération physique d'un composant, d'une altération d'un support physique.

Elle est utilisée pour le contrôle d'accès des utilisateurs, par exemple sur des sites sensibles, pour des équipements ou des comptes d'utilisateurs.

Elle permet l'authentification conjointe d'utilisateurs et d'équipements.

Le mot « donnée biométrique », dans la suite de la description, couvre les empreintes digitales, l'iris, ... toutes les données biométriques possibles.

Le terme « modalité » est utilisé dans la présente description pour désigner une donnée biométrique, la réponse d'un PUF ou toute autre donnée susceptible d'être bruitée associée à un individu ou à un objet que l'on souhaite authentifier.

Dans le domaine de l'authentification, le problème posé est de savoir extraire une donnée connue à partir d'une donnée floutée et de générer des données d'authentification ou des clés cryptographiques.

Dans un souci d'augmenter la sécurité au niveau de la reconnaissance biométrique, la tendance actuelle est d'utiliser plusieurs modalités pour authentifier un individu. On effectuera ainsi l'authentification à partir de données floues d'une source possédant de multiples modalités, pouvant être différentes en taille, en type et/ou en métrique. Une modalité dans le domaine de la biométrie représente par exemple une empreinte digitale, la main, le visage, la voix, l'iris, la rétine, la signature dynamique ou tout autre caractéristique biométrique. La modalité peut aussi bien être la réponse d'un PUF ou toute autre donnée susceptible d'être bruitée.

L'article principal connu dans ce domaine est celui publié par Dodis et al., intitulé « Fuzzy extractors : How to generate strong keys from biometrics and other noisy data » Eucrocypt 2004, LCNS, vol 3027, pp 523-540 qui traite du problème du caractère non uniforme des données mesurées et de la présence de bruit. Pour rendre les données stables malgré la présence de bruit, les auteurs de cet article proposent l'utilisation d'un extracteur flou. Une possibilité pour construire un extracteur flou est l'utilisation de deux primitives. Un premier module, désigné par l'expression anglo-saxonne « secure sketch » permet la conciliation de l'information, c'est-à-dire le rétablissement d'une valeur systématiquement identique en sortie pour une même donnée d'entrée, et un second module permet de rendre uniforme la sortie de l'extracteur flou par application d'une fonction d'extraction d'aléa sur ladite sortie, préalablement stabilisée. L'extracteur flou fonctionne en deux phases : l'enrôlement et la correction. La phase d'enrôlement peut n'être exécutée qu'une seule fois ; elle produit à partir d'une donnée de référence, notée w, issue d'une mesure d'une donnée confidentielle W fournie en entrée, une donnée publique, notée s et qualifiée dans la plupart du temps de « sketch ». Classiquement, la donnée de référence w peut être obtenue via une première mesure issue d'un traitement d'une donnée confidentielle W reçue par un capteur ou un composant électronique. A titre illustratif, la donnée confidentielle W est une empreinte digitale et la donnée de référence w est la donnée caractéristique obtenue par une première mesure de cette empreinte par un capteur. Seule la donnée publique s est enregistrée, la donnée de référence w étant confidentielle. La donnée publique joue donc un rôle de reconstruction de la mesure confidentielle de référence w à partir d'une donnée bruitée w'.

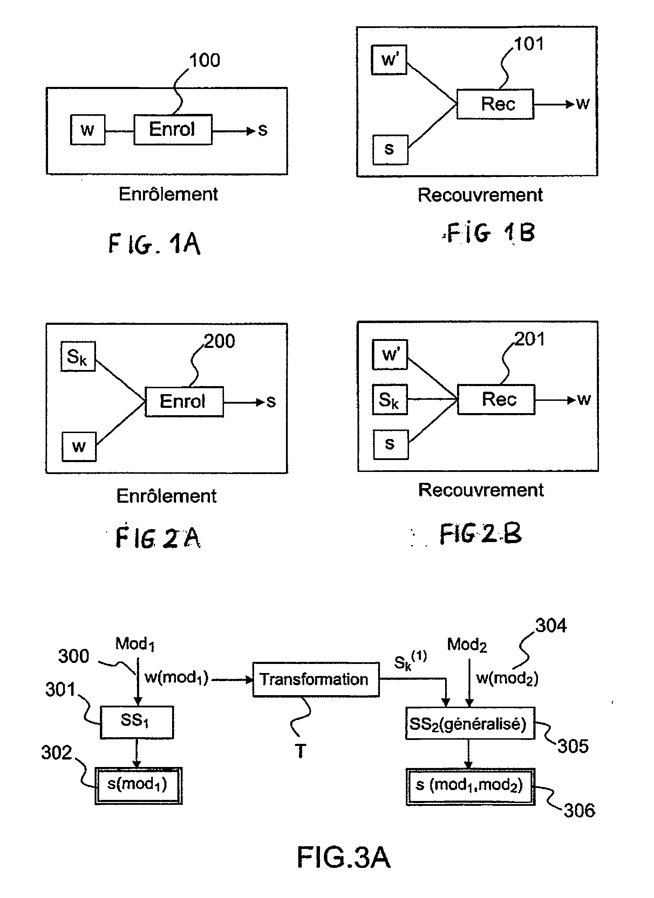

Les figures 1A et 1B schématisent respectivement les phases d'enrôlement et de recouvrement. Sur ces figures, w est la donnée d'origine, s est le sketch, et w' la seconde donnée floue ou bruitée.

Plus formellement, dans l'article précité, un secure sketch est défini de la façon suivante : soit $M$ correspondant à un espace métrique muni d'une opération de mesure de distance entre w et w' qui sont des mesures des données et m, m' des paramètres d'entropie, un secure sketch de paramètres $(M,m,m',t)$ est une paire de procédures 'sketch' ou enrôlement (Enrol) et 'recover' ou recouvrement (Rec) telles que :

a) la procédure Enrol 100 prend en entrée $w \in M$ et retourne une chaîne de bits $s \in \{0;1\}^*$.
b) la procédure de recouvrement Rec 101 prend en entrée un élément $w' \in M$ et une chaîne de bits $s \in \{0;1\}^*$. La propriété de correction du secure sketch garantit que si dis(w,w')$\leq t$ alors Rec(w', SS(w)) = w. Si dis(w,w') > t, aucune garantie n'est donnée sur la sortie de Rec.
c) la propriété de sécurité garantit que pour toute distribution W sur M de min-entropie m, la valeur de W ne peut être retrouvée par l'adversaire qu'avec une probabilité inférieure à $2^{-m'}$: $\overline{H}_\infty(W,SS(W) \geq m'$ où $\overline{H}_\infty(.)$ est la min-entropie.

Classiquement, la donnée de référence w peut être obtenue via une première mesure issue d'un traitement d'une donnée confidentielle W reçue par un capteur ou un composant électronique. A titre illustratif, la donnée confidentielle W est une empreinte digitale et la donnée de référence w est la donnée caractéristique obtenue par une première mesure de cette empreinte par un capteur. Par la suite, la phase de correction est exécutée à chaque fois que l'on souhaite retrouver la donnée de référence w. A cette fin, une donnée bruitée w' provenant d'une mesure issue d'un traitement de la donnée confidentielle W - par exemple, une seconde mesure de la même empreinte digitale - est combinée à la donnée publique s. La donnée publique s joue donc un rôle dans la reconstruction de la mesure confidentielle de référence w à partir d'une donnée bruitée w'. Si la donnée bruitée w' est trop éloignée de la donnée de référence w, cette donnée de référence w ne peut être reconstruite. C'est le cas, par exemple, lorsque la donnée bruitée w' est obtenue par une mesure d'un traitement d'une donnée X différente de la donnée confidentielle W.

Un des problèmes du secure sketch classique est que la donnée en entrée (w ou w') est d'une certaine taille et il n'est alors pas toujours possible de la traiter. Souvent, lorsque l'on utilise des codes correcteurs, les données physiques imposent des contraintes sur les paramètres du code. Il se peut dans certains cas que ces contraintes soient antagonistes ce qui fait qu'il n'existe pas de codes correcteurs d'erreurs capables à la fois de corriger correctement la donnée w' et de maintenir un bon niveau de sécurité. Pour remédier à ce problème, l'idée est donc la suivante : on allonge de façon déterministe la taille des données ce qui permet de les adapter à la longueur du code utilisé. La position et la valeur des bits à ajouter pour effectuer cette élongation sont stockées dans une clé secrète $S_k$ = $[(pos_1,...,pos_k) ; (val_1,...,val_k)]$; où les $val_i$ sont des bits et les $pos_i$ représentent les positions des bits de valeur $val_i$ à ajouter dans la donnée pour effectuer son élongation. La clé secrète $S_k$ sert donc à augmenter la taille des données.

Le secure sketch généralisé ainsi défini est schématisé sur les figures 2A et 2B, où l'on retrouve pour la phase d'enrôlement 200 la donnée w et la clé secrète $S_k$ qui permettent de générer le sketch s et pour la phase de recouvrement 201, la donnée bruitée w', le sketch s et la clé secrète $S_k$ qui permettent de retrouver la donnée w. Une façon de construire des secure sketches est, par exemple, donnée dans la demande de brevet déposée par le Demandeur sous la référence FR 0903699 ou dans la demande de brevet déposée ce jour par le Demandeur ayant pour titre « Procédé de reconstruction d'une mesure de référence d'une donnée confidentielle à partir d'une mesure bruitée de cette donnée, notamment pour la génération de clés cryptographiques ».

Les solutions existantes connues du Demandeur pour authentifier des individus, des objets ou conjointement des individus et des objets ne permettent pas l'interopérabilité des différents types de modalités utilisées. Les solutions biométriques multimodales actuelles utilisent en effet la combinaison des solutions dédiées à chaque type de biométrie.

Le document intitulé « Privacy-Aware Biiométrics : Design and Implementation of a Multimodal Vérification System » de Stelvio Cimato publié dans Computer Security Applications Conférence, 2008 décrit un système d'authentification multimodale dans lequel les données de plusieurs sources bométriques sont jointes pour authentifier l'utilisateur.

Le document intitulé « Fuzzy Extractors : How to generate Strong Keys from Biometrics and Other Noisy Data » de Yevgenis Dodis, internet citation, 1 janvier 2008, XP007905694 divulgue une methode de génération de clés mettant en oeuvre des sketchs sécurisés.

Le document intitulé « Robust Fuzzy Extractors and Authentificated Key Agreement from Close Secrets », de Yevgenis Dodis du 1 janvier 2006 publié dans « advances in cryptology - crypto 2006 lecture notes in computer science, LNCS, springer, décrit une méthode de générationde clés mettant en oeuvre des sketchs sécurisés.

Le document intitulé « On Extract-then-Expand Key Derivation Functions and an HMAC-based KDF » décrit une methode d'expansion de clé à partir de données biométriques.

L'objet de l'invention concerne un procédé d'authentification multimodale d'individus ou d'objets ou conjointement d'individus et d'objets, lesdits individus ou lesdits objets étant caractérisés ou associés à une ou plusieurs modalités modi avec i allant de 1 à n comportant

a) la connaissance d'un ensemble de mesures des n modalités et des sketches correspondant à chacune des modalités s(mod1), s(mod1,mod2), ..., s(mod1,...,modi), ..., s(mod1,...,modn),
le procédé est caractérisé en ce qu'il comporte au moins les étapes suivantes :
b) une étape de mesure d'une donnée floue ou bruitée w'(mod1) (310) correspondant à une première modalité mod1,
c) la correction de la mesure de la première modalité w'(mod1) au moyen d'un secure sketch $SS_1$ qui prend en entrée la mesure bruitée w'(mod1) et le sketch s(mod1) correspondant à la modalité 1 mod1, afin d'obtenir une mesure corrigée ou débruitée w(mod1),
d) transformer la donnée w(mod1) en utilisant une fonction de transformation non inversible afin de trouver une première clé secrète $S_k^{(1)}$, c'est-à-dire qu'à partir de la connaissance de $S_k^{(1)}$ = $[(pos_1; ...; pos_k); (val_1; ...; val_k)]$ il n'est pas possible de retrouver de l'information concernant la donnée w,
réitérer les étapes suivantes e) à h) tant que i est inférieur ou égal à n, nombre de modalités fixé initialement,
e) effectuer une mesure d'une ième modalité w'(modi) avec i supérieur ou égal à 2 et inférieur ou égal à n,
f) corriger ladite ième modalité w'(modi) avec i supérieur ou égal à 2 et inférieur ou égal à n le nombre de modalités choisies pour l'authentification en exécutant les étapes suivantes :
g) utiliser la clé $S_k^{(i-1)}$ obtenue en appliquant la fonction d'élongation sur la modalité w'($mod_i$) afin de générer une donnée étendue w'e(modi) en augmentant la taille de la donnée de référence avec les k valeurs composant la clé $S_k^{(i-1)}$,

h) déterminer à partir de la donnée étendue w'e(modi) et du sketch s(mod1,..., modi) la valeur débruitée étendue we(mod1,..., modi),

i) réitérer les étapes e) à h) tant que i est inférieur ou égal à n, nombre de modalités fixé initialement,

i) utiliser le mot we(mod1,...modn) afin d'authentifier l'utilisateur ou l'objet correspondant aux n modalités mesurées ou afin de générer une clé cryptographique.

La fonction de transformation 'T' prend, par exemple, en entrée une donnée w = $w_1,...,w_m$ et génère une clé $S_k$ = [$(pos_1; ...; pos_k)$; $(val_1; ...; val_k)$] où les $val_i$ sont des bits et les $pos_i$ représentent les positions des bits de valeur $val_i$ à ajouter, les k positions étant choisies parmi n emplacements et en ce que ladite fonction de transformation 'T' présente les propriétés suivantes :

a) Non-inversibilité, c'est-à-dire qu'à partir de la connaissance de $S_k$ = [$(pos_1; ...; pos_k)$; $(val_1; ...; val_k)$] il n'est pas possible de retrouver de l'information concernant la donnée w, soient $w \in \{0;1\}^m$ et $S_k \in P^k \times \{0;1\}^k$ tels que $S_k$ = T(w), alors $\forall S_k$, H(w) = m;

b) Probabilités de distributions uniformes sur les valeurs de val, de pos et sur l'union de ces deux valeurs avec :

$$ -\forall i \in \{1;...;k\}, \forall VAL \in \{0;1\}^k, P[val_i = VAL] = \frac{1}{2^k} $$

$$ - \forall i \in \{1;...;k\}, \forall POS \in P, P[pos_i = POS] = \frac{1}{n} $$

$$ -\forall i \in \{1;...;k\}, \forall VAL \in \{0;1\}^k, \forall POS \in P, P[val_i = VAL, pos_i = POS] = \frac{1}{n * 2^k} $$

Le procédé peut utiliser une fonction de transformation 'T' définie de la manière suivante : à partir d'une donnée w=$w_1...w_m$, déduire une « clé secrète » $S_k$ =[$(pos_1,...,pos_k)$ ;$( val_1,...,val_k)$] uniforme.

**Phase 1** : choisir les $val_i$

choisir une fonction de hachage h :$\{0;1\}^* \rightarrow \{0;1\}^{k+\varepsilon}$, $\varepsilon \in N^*$ l'ensemble des entiers naturels non nuls, pour i=1 à k, $val_i$=(h(w))$_i$.

**Phase 2** : déterminer les $pos_i$ en se basant sur, l'algorithme KSA de génération de permutation du RC4, connu de l'Homme du métier,

S est un tableau de n cases indexées de 0 à n-1,

choisir une fonction de hachage h et poser K=h(w). Découper ensuite K en paquets de $\lceil \log_2 n \rceil$ bits (ici $\lceil \rceil$ désigne le plus petit entier supérieur ou égal à x),

si le dernier paquet ne contient pas exactement $\lceil \log_2 n \rceil$ bits, ne pas conserver ledit paquet,

poser ensuite key[0] le premier paquet (en base 10), key[1] le deuxième, etc. soit keylength le nombre de paquets.

```
pour i=0 à n-1
    S[i] :=i
p:=0
pour i=0 à n-1
    j:=(j+S[i]+key[i mod keylength]) mod n
    Inverser les valeurs de S[i] et de S[j]
```

S représente une permutation de $\{0,...,n-1\}$,

prendre ensuite une liste publique de k indices (par exemple $\{0,...,k-1\}$) et l'image de chacun de ces éléments par S contient une des k positions cherchées.

Le procédé utilise, par exemple, pour le premier secure sketch $SS_1$, un secure sketch généralisé composé d'une fonction permettant d'étendre la donnée mesurée suivie d'un secure sketch.

Un secure sketch généralisé peut être remplacé par un extracteur flou généralisé (un extracteur flou généralisé est composé d'un secure sketch généralisé et d'une fonction de hachage).

Un certain nombre de secure sketches parmi le premier secure sketch $SS_1$ et certains des secure sketches généralisés suivants sont remplacés par des extracteurs flous généralisés.

Le procédé peut comporter l'utilisation d'un secure sketch généralisé recentré composé d'un secure sketch généralisé auquel il a été ajouté une fonction $Extend_{Sk}^{-1}$ à la sortie, ledit secure sketch généralisé recentré étant disposé au niveau de la mesure de la n-l+1 ième modalité, les n-l modalités précédentes mesurées utilisant des secure sketches généralisés.

Selon un mode de mise en oeuvre, le procédé comporte au moins les étapes suivantes :

soit :

- n : nombre total de secure sketches classiques notés SS, généralisés notés SSg ou recentrés notés SSgr utilisés, seul le premier de la chaîne peut être un secure sketch classique,
- l : la limite, correspond à la plus longue chaîne de SSg en partant de la fin et en incluant le premier SSgr,
- C : chaîne de n-l+1 bits qui représentent les n-l premiers SS, SSg ou SSgr (2 bits pour le premier SS (celui ci peut être un secure sketch classique, un SSg ou un SSgr) et 1 bit pour chacun des SSg ou SSgr placés aux positions 2 à n-l),

positionner un SSgr en position n-l+1 et pour tous les autres blocs des SSg, récupérer la donnée en sortie du $SSg_n$. Cette donnée récupérée ne dépend alors que des l dernières modalités; $SSg_n$ un SSg positionné à la place n, ainsi l'indice désigne la position de l'outil utilisé.

Le procédé peut aussi récupérer une donnée qui dépend d'un certain nombre de modalités l' et ce avant la limite l et qui nécessite l'authentification multimodale des m premières modalités. Pour cela, on place un SSgr en position m-l'+1 et des SSg aux positions m-l'+2, ..., m.

Selon une variante de réalisation, le procédé récupère m modalités en sortie de m secure sketches (SS, SSg ou SSgr) prédéfinis pour créer une donnée dépendant de cette liste de modalités. Cette donnée peut par exemple servir à la génération d'un clé cryptographique qui dépend des m modalités choisies.

Un exemple de telle réalisation est de générer une clé crytographique en appliquant une fonction de hachage sur la concaténation des mesures « défloutées » des m modalités.

Selon une variante de réalisation, le procédé comporte au moins les étapes suivantes pour obtenir une donnée qui ne dépend que de la modalité m mais qui nécessite l'authentification des m premières modalités : on dispose un secure sketch généralisé recentré (SSgr) en position m, le type des autres blocs (SSg ou SSgr) n'a alors aucune influence sur la dépendance de cette donnée.

Le procédé met, par exemple, en oeuvre un principe d'authentification croisée comprenant au moins les étapes suivantes : passer d'abord dans le premier secure sketch SS1, afin d'en déduire une première clé secrète $Sk^{(1)}$, appliquer ladite première clé secrète à la deuxième modalité mod2, puis dériver une seconde clé secrète à appliquer à la première modalité mod1 afin d'obtenir la valeur de $w^{(2)}(mod1, mod2)$. L'exposant (2) signifie que c'est la deuxième fois que le SS1 est utilisé par le procédé.

Le procédé décrit précédemment et ci-après est utilisé, par exemple, pour authentifier un individu à partir de plusieurs modalités choisies parmi la liste suivante : la voix, les empreintes digitales, l'iris, la rétine, le visage..., la réponse de PUFs, la combinaison des biométries et des réponses de PUFs ou toute autre données floues

D'autres caractéristiques et avantages du dispositif selon l'invention apparaîtront mieux à la lecture de la description qui suit d'un exemple de réalisation donné à titre illustratif et nullement limitatif annexé des figures qui représentent :

- Les figures 1A et 1B, la notion de secure sketch,
- Les figures 2A et 2B, la notion de secure sketch généralisé,
- La figure 3A, l'étape d'initialisation du système prenant en compte deux modalités et permettant la génération des sketches utilisés lors de la phase d'authentification,
- La figure 3B, le schéma d'une phase d'authentification dans le cas d'une application prenant en compte deux modalités,
- La figure 3C, une illustration pour le secure sketch généralisé,

**EP 2 656 534 B1**

- La figure 4A, et la figure 4B, deux exemples de répercussion d'erreurs dans la chaîne de traitement,
- La figure 5A, un exemple de généralisation du procédé selon l'invention à une pluralité de modalités, les figures 5B et 5C, des étapes d'un exemple de construction d'une fonction de transformation,
- Les figures 6A, 6B, deux exemples d'utilisation avec ajout de fonctions de hachage,
- La figure 7, un exemple de gestion des différentes modalités : il n'est pas obligatoire d'associer une modalité à un secure sketch, les différentes modalités peuvent être réparties à convenance sur les différents secure sketches.
- Les figures 8 et 9 un exemple de la mise en oeuvre du procédé selon l'invention réalisant de l'authentification croisée et la figure 10 la phase d'enrôlement correspondante,
- La figure 11, un schéma pour une définition d'un secure sketch généralisé recentré,
- La figure 12, une comparaison entre le secure sketch généralisé et le secure sketch généralisé recentré,
- La figure 13, une représentation d'un schéma d'authentification mettant en oeuvre un secure sketch généralisé recentré,
- La figure 14A, un schéma d'authentification mettant en oeuvre plusieurs secure sketches généralisés recentrés,
- La figure 14B, un schéma d'enrôlement correspondant à la figure 14A,
- Les figures 15A, 15B, 15C des exemples de mise en oeuvre du procédé dans lesquels la donnée du sortie ne dépend que d'un nombre donné de modalités,
- Les figures 16A, 16B, des exemples chiffrés de mise en oeuvre du procédé de la figure 15A,
- La figure 17, un exemple de dispositif selon l'invention.

L'idée sur laquelle repose le procédé selon l'invention est l'authentification multimodale, c'est-à-dire que le procédé utilise plusieurs types de modalités pour effectuer l'authentification d'un individu ou d'un composant par exemple associé à un PUF ou tout autre support ou conjointement d'individus et de supports.

La description qui va suivre, donnée à titre illustratif afin de comprendre le principe mis en oeuvre dans l'invention, est donnée dans un premier temps avec deux modalités désignées $mod_1$ et $mod_2$, les deux modalités étant dans cet exemple des réponses de PUFs ou encore des données biométriques et sera généralisée au cas où le procédé utilise n modalités pour authentifier un ou plusieurs individus et/ou objets.

La figure 3A représente un exemple de schéma d'initialisation du système qui va permettre d'obtenir une base de données comprenant pour une modalité donnée, le sketch qui lui correspond.

Les notations utilisées sur cette figure 3A seront conservées pour désigner les mêmes éléments pour toutes les figures. Dans cet exemple, la procédure exécutée par les secure sketches est la procédure de recouvrement. Au préalable, l'étape d'enrôlement génère pour i=1 à n des sketches s(mod1, ..., modi). Chaque sketch dépend à la fois de la modalité i et des modalités précédentes (mod1, ..., modi-1). Cette dépendance est due aux clés secrètes $S_k(1)$, ..., $S_k(i-1)$ générées par la fonction de transformation T détaillée ci-après.

Le principe consiste à effectuer l'enrôlement pour le premier secure sketch $SS_1$ car le second enrôlement nécessite la clé secrète $S_k^{(1)}$ qui est dérivée de $w(mod_1)$ : notons que chaque clé $S_k$ est propre à une modalité. Une fois le premier enrôlement terminé, le procédé dispose de $s(mod_1)$ et transforme la donnée $w(mod_1)$ en la clé secrète $S_k^{(1)}$. Ensuite, une mesure de la deuxième modalité $mod_2$ est effectuée pour obtenir $w(mod_2)$ puis $s(mod_1,mod_2)$.

L'étape d'enrôlement ou d'initialisation est représentée à la figure 3A. En entrée du premier secure sketch $SS_1$, le procédé effectue une mesure 300 de la modalité w(mod1) qu'il transmet ensuite au secure sketch $SS_1$, 301, afin de déterminer la valeur du sketch s(mod1), 302, associée à la modalité mod1. La valeur w(mod1) est aussi envoyée vers la fonction de transformation 'T' afin de générer une clé $S_k^{(1)}$ qui va être utilisé pour étendre 304 la mesure w(mod2).

Ensuite, grâce à la clé secrète $S_k^{(1)}$, la fonction d'enrôlement du secure sketch généralisé 305 pour obtenir $s(mod_1,mod_2)$ 306 le sketch qui est associé à la modalité mod2 et aussi à la modalité mod1 via la clé secrète $S_k^{(1)}$.

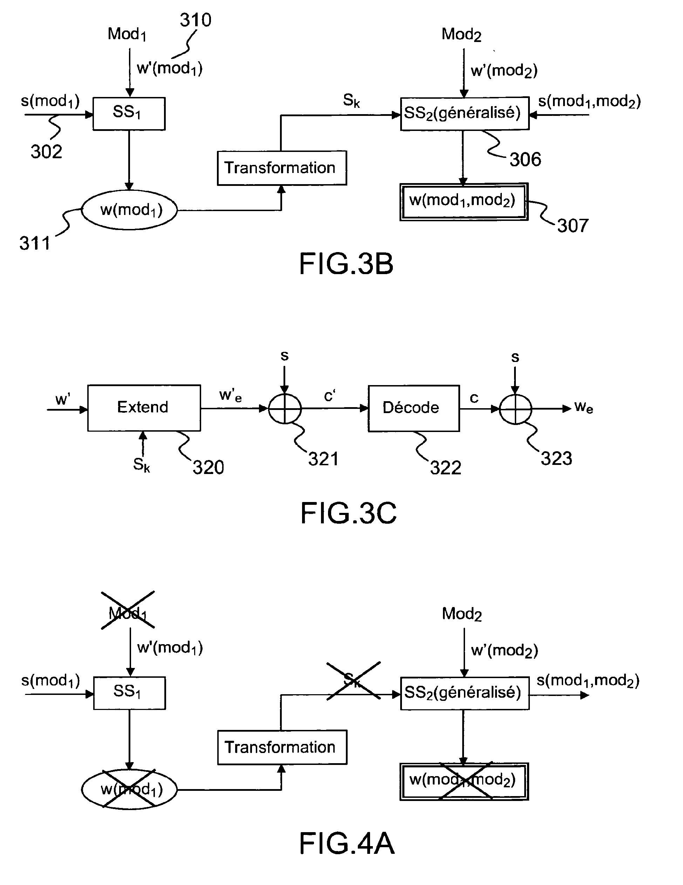

L'étape de correction ou de recouvrement est schématisée à la figure 3B dans un exemple d'authentification à deux modalités.

En entrée du premier secure sketch le procédé réalise une mesure $w'(mod_1)$, 310, de la modalité $mod_1$ qui, si elle est assez proche de $w(mod_1)$, pourra être corrigée grâce au sketch $s(mod_1)$ 302. Ensuite, le $w(mod_1)$ 303 obtenu est transformé 'T' en une clé secrète $S_k^{(1)}$ qui donne l'emplacement des bits à ajouter dans la donnée issue du secure sketch suivant, sur la figure le secure sketch généralisé $SSg_2$. La procédure de transformation en la clé secrète est détaillée plus loin dans la description. Au niveau du deuxième secure sketch généralisé $SSg_2$, 305, le procédé prend en entrée une mesure bruitée $w'(mod_2)$ 306 de la modalité $mod_2$ qui sera corrigée grâce au sketch $s(mod_1,mod_2)$ si elle est assez proche de la donnée initiale pour générer la mesure we(mod1, mod2) 307 qui est représentative des deux modalités mod1 et mod2 et qui permet l'authentification d'un individu, d'un composant ou d'un individu et d'un composant à partir de ces deux modalités.

Ce schéma permet d'authentifier un composant électronique, par exemple, ou une personne, etc. par deux modalités car si l'une des deux mesures de modalités n'est pas satisfaisante, l'authentification échoue.

Ce système permet de ne pas stocker de données sensibles : seuls sont gardés en mémoires les sketches $s(mod_1)$ et $s(mod_1, mod_2)$ qui ne révèlent pas d'information sur les données initiales.

Dans le cas d'un échec de l'authentification, il n'est pas possible de savoir quelle modalité en est responsable ce qui est un avantage du point de vue de la sécurité.

La figure 3C présente un exemple de secure sketch généralisé qui consiste en l'extension de la donnée w en une donnée $w_e$ grâce à $S_k$ puis l'application d'un secure sketch standard (un exemple de secure sketch : le code offset). Le secure sketch généralisé comprend une phase d'enrôlement et une phase de reconstruction. Au cours de la phase d'enrôlement, on traite la donnée w grâce à une « clé » $S_k$, la donnée w est alors étendue en $w_e$ de taille n+k : la fonction qui réalise cette « élongation » ou extension de taille est appelée Extend. A partir de là, le procédé décrit met en oeuvre un secure sketch classique connu de l'Homme du métier et le tout forme le secure sketch généralisé qui permet d'obtenir la donnée étendue $w_e$. Lors de la phase d'enrôlement, on applique le secure sketch généralisé sur w pour obtenir la donnée s. La phase de reconstruction consiste à traiter la donnée bruitée w' mesurée proche de w avec la clé secrète $S_k$ 320 pour obtenir une valeur étendue $w'_e$. On applique ensuite un secure sketch standard 321, 322, 323, sur $w'_e$ pour obtenir $w_e$. Dans certains cas, il est possible d'inverser l'élongation des données pour retrouver w, c'est ce que l'on appelle un « secure sketch généralisé recentré » détaillé dans le brevet déposé le même jour par le Demandeur intitulé « Procédé de reconstruction d'une mesure de référence d'une donnée confidentielle à partir d'une mesure bruitée de cette donnée, notamment pour la génération de clés cryptographiques ».

Il y a donc en sortie du système, après correction de la donnée w', la donnée $w_e$ qui correspond à la donnée w étendue avec $S_k$ : $w_e$=Extend(w,$S_k$) où Extend est une fonction qui sera définie plus loin et qui peut être vue comme une fonction de $S_k$ et de la variable w permettant l'élongation des données : elle sera notée Extend(w,$S_k$). La donnée $w_e$ est de taille n+k>n donc tant que $S_k$ est secret la sécurité sur $w_e$ est augmentée par rapport à w. Lorsque l'on a besoin que ce soit une fonction de w paramétrée par $S_k$, nous la noterons $\text{Extend}_{Sk}(w)$. Lorsque l'on souhaite retrouver la donnée d'origine à partir de la donnée étendue, nous noterons w=$\text{Extend}_{Sk}^{-1}(w_e)$.

Cette manière de procéder permet de résoudre notamment les problèmes liés aux contraintes sur les codes correcteurs d'erreurs et de retrouver une donnée de la même taille que la donnée originelle indépendante de $S_k$.

Lorsque la deuxième modalité est valide et que la première ne l'est pas, il en découle que la clé $S_k^{(1)}$ est erronée puisque w(mod$_1$) est faux comme il est illustré sur la figure 4A.

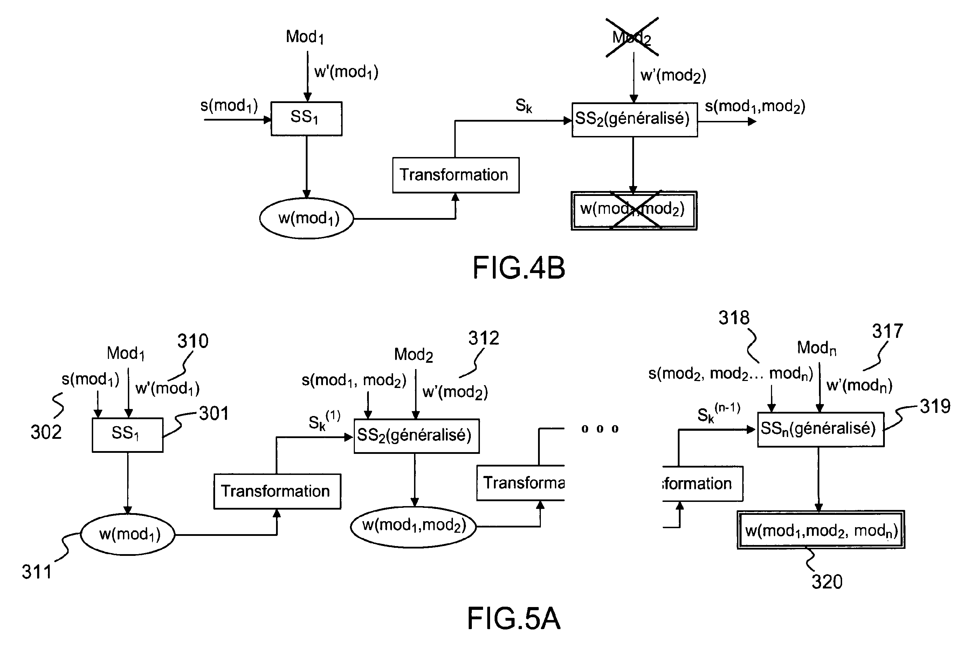

Il en est de même lorsque c'est la seconde modalité qui n'est pas valide, voir la figure 4B.

Généralisation à n secure sketches

La figure 5A schématise le procédé selon l'invention où le nombre de modalités choisies pour authentifier un utilisateur ou un objet est au nombre de n.

Il peut parfois être nécessaire d'utiliser plus de deux modalités pour identifier une personne, des objets, ou conjointement des personnes et des objets (par exemple plusieurs empreintes digitales, la voix, l'iris, différents types de PUFs, combinaison des biométries et des PUFs...) ce qui conduit à cette généralisation.

On retrouve toujours une étape d'enrôlement telle que celle décrite à la figure 3A, en prenant en compte les n modalités, ce qui conduit à la génération des secures sketches à partir de $SS_1$, $SS_2$ généralisé, ....$SS_n$ généralisé, aux clés Sk$^{(1)}$, ..Sk$^{(n-1)}$ correspondant à

| Mod1 | ... | Modi | ... | Modn |
|---|---|---|---|---|
| $SS_1$ | | $SS_i$généralisé | | $SS_n$ généralisé |
| s(mod1) | | s(mod1,...,modi) | | s(mod1, ...,modn) |

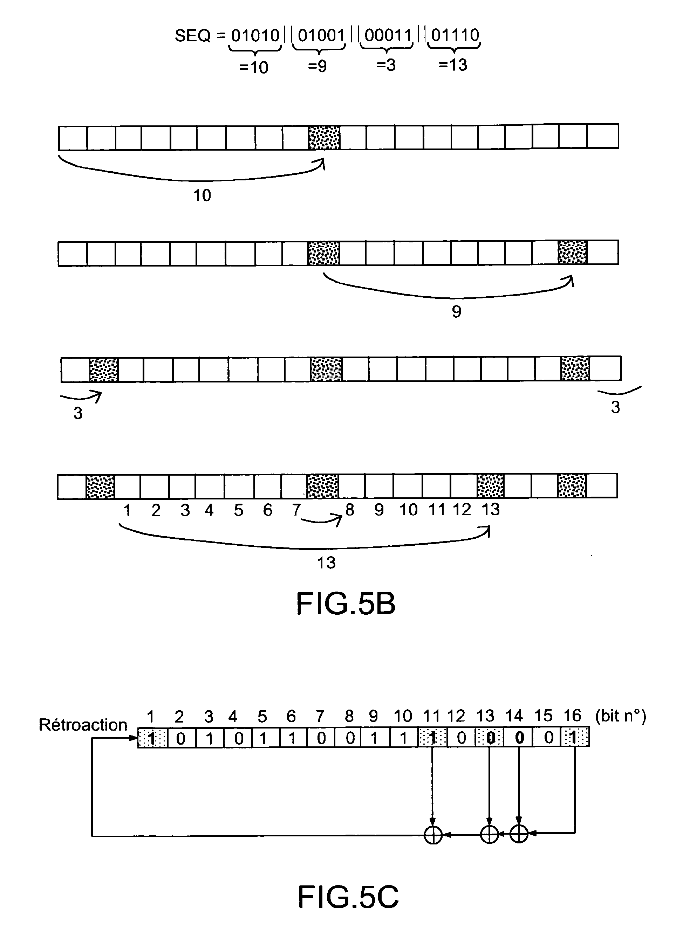

Sur la figure 5, les étapes concernant la phase d'authentification mise en oeuvre par le procédé selon l'invention sont les suivantes :

**1ère étape**
Mesure de la modalité mod$_1$ qui donne la mesure bruitée w'(mod$_1$), 310, puis correction de la mesure bruitée en utilisant le sketch s(mod$_1$) et le secure sketch $SS_1$, 301, on obtient la valeur w(mod$_1$) débruitée 311.

**2ème étape**
Transformation de la valeur w(mod$_1$) 311 débruitée pour obtenir une clé $S_k^{(1)}$ associée à la donnée w(mod$_1$), via la fonction de transformation 'T'.

**3ème étape**
Mesure de la valeur bruitée w'(mod$_2$) 312 correspondant à la modalité 2, puis on corrige la valeur étendue en utilisant un secure sketch généralisé dans sa phase de correction avec la clé $S_k^{(1)}$ pour obtenir w(mod$_1$, mod$_2$) qui est fonction des deux modalités mod$_1$, mod$_2$, donc de la modalité à traiter et des modalités précédentes (ici mod1 seulement),

7

**4ème étape**

On transforme par une fonction de tranformation 'T' la valeur $w(mod_1, mod_2)$ en une clé $S_k^{(2)}$ qui va être utilisée notamment pour étendre la valeur mesurée pour la modalité 3 et ainsi de suite.

**Etape finale dans le cas d'une authentification multimodale**

On mesure la modalité modn, on obtient une valeur bruitée w'(modn) 317; on étend cette valeur bruitée en utilisant la clé $S_k^{(n-1)}$ obtenue pour la modalité précédente mod(n-1), puis on corrige la valeur w'(modn) étendue en utilisant le sketch $s(mod_1, ...,modn)$ 318 pour obtenir la valeur débruitée $w(mod_1 ,...,modn)$ qui correspond à un individu ou une chose que l'on cherche à authentifier en utilisant les n modalités. La référence 319 contient la fonction du secure sketch généralisé qui comporte le traitement pour « étendre » la taille de la donnée, et l'étape de recouvrement de la donnée $w_e$.

Dans les exemples précédents, toutes les clés $S_k$ font la même taille. Pour avoir un système simple on peut prendre toutes les modalités de la même taille sauf la première qui est plus longue de k bits. Pour remédier à ce problème, car dans certains cas on préférerait que toutes les données fassent la même taille, on prend la première donnée de la même taille que les autres et on lui ajoute k bits de façon déterministe ou bien on transforme le premier secure sketch en un secure sketch généralisé.

Dans le cas où l'on voudrait que les tailles des modalités ne soient pas les mêmes sur chaque secure sketch, on peut adapter la taille des clés secrètes pour obtenir les tailles souhaitées.

Il est aussi possible d'utiliser des fonctions de transformation différentes en fonction de leur position dans la chaîne. La fonction de transformation sera choisie notamment selon la taille des clés.

Remplacement du $SS_1$ par un SS généralisé :

Sans sortir du cadre de l'invention, il est possible pour exécuter la première étape d'utiliser un secure sketch généralisé. Pour cela, le procédé demande l'utilisation d'une seconde clé secrète que l'on notera $S'_k$ qui servira à l'extension des données $w(mod_1)$ et $w'(mod_1)$. Cette clé secrète devra être stockée contrairement à $S_k$ qui peut être retrouvée chaque fois qu'elle est nécessaire.

Cette action à pour effet d'augmenter la sécurité liée à $w(mod_1)$ en augmentant sa taille grâce à l'extension.

**Description de la fonction de transformation**

Supposons tout d'abord que le secure sketch $SS_1$ prend en entrée des données de taille $n_1$ et le secure sketch $SS_2$ associé à la modalité mod2 prend en entrée des données de taille $n_2$. Soit k la taille de la clé secrète $S_k$, $m_1$ celle de la donnée $mod_1$ et $m_2$ celle de $mod_2$. On a $m_1 = n_1$ et $n_2 = m_2 + k$.

La fonction « Transformation » qui transforme $w(mod_1)$ en une clé secrète $S_k$ prend en entrée $m_1$ bits et en sortie k bits.

La suite donne plusieurs exemples de fonction de transformation pouvant être mises en oeuvre par le procédé selon l'invention à titre illustratif et nullement limitatif.

**Première variante de réalisation pour la fonction de transformation**

La fonction de transformation, 'Transformation' ou 'T', prend en entrée une donnée notée pour la définition $w = w_1,...,w_m$ et elle en tire une clé $S_k = [(pos_1; ...; pos_k); (val_1; ...; val_k)]$ où les $val_i$ sont des bits et les $pos_i$ représentent les positions des bits de valeur $val_i$. Il faut donc choisir k positions parmi n emplacements. Plus formellement, soit P l'ensemble des n positions possibles (que l'on peut identifier à $\{0;1\}^{\lceil log2n \rceil}$ où $\lceil . \rceil$ est la fonction qui associe à un nombre x le plus petit entier naturel supérieur ou égal à x), on veut $T : \{0;1\}^m \to P^k \times \{0;_1\}^k$.

**Propriétés de la fonction**

Cette fonction possède les propriétés suivantes :

1. Non-inversibilité. C'est-à-dire qu'à partir de la connaissance de $S_k = [(pos_1; ...; pos_k); (val_1; ...; val_k)]$ il n'est pas possible de retrouver de l'information concernant la donnée w.

Soient $w \in \{0 ;1\}^m$ et $S_k \in P^k \times \{0;1\}^k$ tels que $S_k = T(w)$. Alors $\forall\, S_k$, H(w) = m. 2. Probabilités de distributions uniformes sur les valeurs de val, de pos et sur l'union de ces deux valeurs. On souhaite donc :

$$-\forall i \in \{1;...;k\}, \forall VAL \in \{0;1\}^{k}, P[val_i = VAL] = \frac{1}{2^k}$$

$$-\forall i \in \{1;...;k\}, \forall POS \in P, P[pos_i = POS] = \frac{1}{n}$$

$$-\forall i \in \{1;...;k\}, \forall VAL \in \{0;1\}^{k}, \forall POS \in P, P[val_i = VAL, pos_i = POS] = \frac{1}{n*2^k}$$

**Exemples**

Une méthode pour construire cette fonction de Transformation est la suivante.
Elle consiste en deux étapes, la première permettant de trouver les valeurs $val_i$ et la seconde les positions $pos_i$ associées à ces valeurs.

Phase 1 : trouver les $val_i$

On a en entrée une donnée $w = w_1...w_m$ et on veut en déduire k bits uniformes pour représenter les k valeurs de $val_i$.

1. La première solution proposée est de choisir une fonction de hachage h dont l'ensemble d'arrivée est $\{0;1\}^{k+\varepsilon}$ avec $\varepsilon \in N^*$ (l'ensemble des entiers naturels non nuls) puis pour i = 1 ,...,k; $val_i = (h(w))_i$, c'est-à-dire que vali prend la valeur du ième bit du haché de w.
2. Une autre solution, un peu plus complexe à mettre en oeuvre, est de poser H = $\{h_i\}_{i \in I}$ une famille de fonctions de hachage où I est un ensemble fini qui possède au moins k éléments. Ensuite, pour i e I, calculer :

$$val_i = \oplus_{j=1}^{k} (h_i(w))_j$$

où $(h_i(w))_j$ représente le $j^{ième}$ bit de $h_i(w)$.

Phase 2 : trouver les $pos_i$

Le but de cette phase est de trouver uniformément k positions parmi n possibles et ce en utilisant $w = w_1...w_m$. La solution proposée dans cet exemple est d'utiliser des registres à décalage à rétroaction linéaire plus connus sous l'abréviation anglo-saxonne « LFSR » (Linear Feedback Shift Register) pour générer une suite pseudo aléatoire de longueur supérieure à $L = k\lceil \log_2 n \rceil$ (Cf. Remarque 1). En ce qui concerne le LFSR, il faut choisir :

a. Un polynôme de rétroaction de degré assez grand et qui permet d'avoir une période très grande (supérieure au nombre de bits générés de façon pseudo-aléatoire dont nous avons besoin : L).
b. Une graine (seed) égale à h(w) où h est une fonction de hachage.

On obtient une séquence pseudo-aléatoire SEQ de longueur $L = k\lceil \log_2 n \rceil$.
On découpe cette séquence en k sous-séquences de longueur $l = \lceil \log_2 n \rceil$ : SEQ = seq1$\|$ ...$\|$seq$_k$. On pose pos1 = seq1 mod n ; pour simplifier les notations, on met les $seq_i$ en base 10. Ensuite, pour trouver $pos_i$, on part de $pos_{i-1}$ et on avance de $seq_i$ cases libres : $pos_i = f(pos_{i-1}; seqi)$. On sous-entend par « case libre » les cases qui ne sont pas encore occupées et, lorsque l'on arrive à la nième case, on repart à la première selon le schéma de la figure 5B.
Remarque 1 (choix de l) A chaque fois que l'on se déplace pour trouver une nouvelle valeur de $pos_i$ on veut que ce déplacement soit compris entre 1 et au moins n cases. Il faut donc $l = \lceil \log_2 n \rceil$ bits pour caractériser ce déplacement.

Exemple 1

Un LFSR est composé de registres à décalages qui sont initialisés (avec la graine) et qui évoluent grâce à des fonctions booléennes entre ces bascules dont la sortie est réinjectée à l'entrée des bascules. Sur l'exemple suivant, les fonctions booléennes sont des Xor et on modélise le LFSR avec des polynômes représenté à la figure 5C.

A chaque cran d'horloge, tous les bits sont décalés vers la droite et le bit numéro 1 est remplacé par le Xor des bits 11, 13, 14 et 16.

La modélisation avec des polynômes nous donne :

1. La graine (seed) : $T(X) = X^{16} + X^{11} + X^{10} + X^9 + X^6 + X^5 + X^3 + X$
2. Le polynôme de rétroaction : $P(X) = X^{16} + X^{14} + X^{13} + X^{11} + 1$

La graine correspond à l'état initial du système et le polynôme P permet de caractériser la rétroaction.

De plus, nous avons besoin de polynômes de rétroaction qui permettent d'avoir des périodes très grandes pour le LFSR pour que la suite soit pseudo-aléatoire. Il existe de nombreux polynômes qui ont les bonnes propriétés, comme par exemple $P(X) = X^{19} + X^{18} + X^{17} + X^{14} + 1$ qui possède une période de 524287.

**Deuxième variante pour la fonction de transformation**

La méthode proposée maintenant est plus facile à implémenter que celle utilisant les LFSR.

Cette fonction possède toutes les propriétés souhaitées à savoir choisir les $val_i$ et les $pos_i$ en fonction de w et que ces choix semblent être le fruit du hasard.

Rappel du problème à résoudre :

La fonction Transformation doit, à partir d'une donnée $w=w_1...w_m$, déduire une « clé secrète » $S_k$ $=[(pos_1,...,pos_k) ;( val_1,...,val_k)]$ uniforme.

Pour les $val_i$ trouver k bits qui semblent être pris au hasard.

Pour les $pos_i$ : trouver k positions parmi les n possibles de façon à ce que les positions semblent avoir été tirées au hasard.

**Phase 1 : les $val_i$**

Cette phase est exactement la même que la fonction de Transformation précédente : choisir une fonction de hachage $h : \{0 ;1\}^* \rightarrow \{0 ;1\}^{k+\varepsilon}$, $\varepsilon \in N^*$. Pour i=1 à k, $val_i=(h(w))_i$.

**Phase 2 : les $pos_i$**

Cette phase se base sur KSA, l'algorithme de génération de la permutation de l'algorithme de chiffrement RC4.

KSA de RC4 : Soit S un tableau de 256 cases.

```
pour i=0 à 255
        S[i] := i
p := 0
pour i= 0 à 255
        j := (j+S[i]+ key[i mod keylength]) mod 256
        inverser les valeurs de S[i] et de S[j]
```

Adaptation de cet algorithme au problème posé dans la présente invention

Ici S est un tableau de n cases indexées de 0 à n-1.

On choisit une fonction de hachage h et on pose K=h(w).

On découpe ensuite K en paquets de longueur $\lceil \log_2 n \rceil$. Si le dernier paquet ne contient pas exactement $\lceil \log_2 n \rceil$ bits, on le jette : dans le cas contraire il y aurait la création d'un biais statistique.

On pose ensuite key[0] le premier paquet (en base 10), key[1] le deuxième, etc.

Soit keylength le nombre de paquets.

```
pour i=0 à n-1
        S[i] :=i
p :=0
pour i= 0 à n-1
        j :=(j+S[i]+ key[i mod keylength]) mod 256
        inverser les valeurs de S[i] et de S[j]
```

S contient maintenant n entiers de 0 à n-1 dans un ordre qui semble aléatoire (c'est une permutation de {0,...,n-1}). On prend ensuite une liste publique de k indices (par exemple 0,...,k-1) et l'image de chacun de ces éléments par S contient une des k positions cherchées.

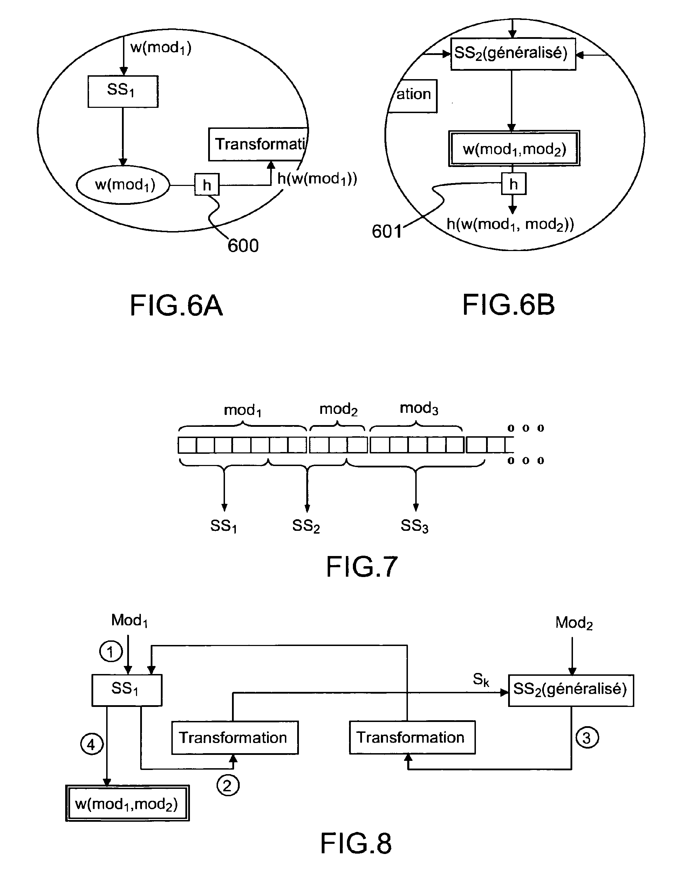

Le système et le procédé décrits précédemment peuvent être généralisés à plusieurs types d'applications illustrées aux figures 6A à 8

Remplacement du $SS_1$ par un extracteur flou figure 6A:

Sur la figure 6A, en sortie du premier secure sketch, au lieu d'appliquer $w(mod_1)$ en entrée de la fonction Transformation 'T', on applique $h(w(mod_1))$ 600 où h est une fonction de hachage. Ceci a pour effet que l'entrée de Transformation est uniforme. De plus, si un attaquant possède la clé secrète et qu'il réussi à inverser la fonction Transformation, il n'aura pas accès à la donnée $w(mod_1)$. Il est possible d'appliquer une fonction de hachage sur tous les w(mod1,...,modi) pour i=1 à n-1.

Remplacement du $SS_2$ par un extracteur flou figure 6B:

Dans le cas représenté à la figure 6B, on applique une fonction de hachage h à la sortie $w(mod_1,mod_2)$ 601 du secure sketch. De cette façon, il est possible de vérifier grâce au haché que la réponse du système correspond à une donnée biométrique valide sans avoir à stocker cette donnée ce qui est un bon point pour la sécurité. De plus, ce haché permet d'associer à chaque personne physique une clé cryptographique utilisable dans de nombreuses applications. Sans ce haché la donnée $w(mod_1,mod_2)$ est inutilisable en tant que clé cryptographique car elle n'est pas uniforme.

Notons que si $|h(w(mod_1,mod_2))| < |w(mod_1,mod_2)|$ alors on perd en sécurité mais on conserve l'avantage de ne pas stocker la donnée mais seulement son haché.

Ceci est également valable pour la généralisation à n quelconque plus grand que 2, à savoir le remplacement d'n ou plusieurs SSg ou SSgr par des extracteurs flous généralisés ou généralisés recentrés.

Un extracteur flou généralisé étant composé d'un SSg avec une fonction de hachage. Un extracteur flou généralisé recentré étant composé d'un SSgr avec une fonction de hachage.

Remplacement des deux secure sketches par des extracteurs flous:

Il est possible de remplacer à la fois le premier secure sketch par un extracteur flou et le deuxième par un extracteur flou généralisé.

Ceci est également valable pour la généralisation à n quelconque plus grand que 2.

Troncature des mesures :

Il est possible de tronquer directement les mesures biométriques effectuées pour que leurs tailles s'adaptent à un secure sketch qui est contraignant au niveau de la taille de ses entrées.

Exemple : pour chaque modalité modi, si la modalité contient y bits et que le SS en prend x en entrée, alors on ne conserve par exemple que les x premiers bits de la modalité.

D'autres solutions sont possibles, comme par exemple enlever les y-x premiers bits en position paire. L'essentiel est de conserver x bits de façon connue et déterministe.

n extracteurs flous :

Selon un mode de mise en oeuvre du procédé selon l'invention, il est possible de généraliser les n secure sketches généralisés en n extracteurs flous généralisés ou extracteurs flous généralisés recentrés.

Secure sketches et extracteurs flous :

Dans la même idée que précédemment, il est possible de laisser k secure sketches (généralisés ou recentrés) et convertir les n-k restants en extracteurs flous(généralisés ou recentrés).

Les étapes du procédé décrites précédemment sont applicables à des PUFs (Physical Unclonable Functions) :

Un PUF est une fonction réalisée sur un circuit électronique qui envoie des challenges et reçoit les réponses. Une ou plusieur de ces réponses forme la sortie du PUF. Ces challenges sont basés sur des éléments physiques aléatoires choisis de telle sorte qu'un PUF donnera des réponses similaires sur un même circuit et des réponses différentes sur deux circuits distincts. On utilise par exemple le temps de parcours sur des chemins différents, l'initialisation des transistors, des propriétés optiques... Ces réponses peuvent faire office de modalités pour authentifier des composants sur des circuits électroniques.

Les modalités en entrée des secure sketches peuvent sans problème être des données biométriques comme par exemple la voix, les empreintes digitales, l'iris, la rétine, le visage... il est possible, par exemple, d'authentifier une unique personne en mesurant plusieurs de ses données biométriques mais il est aussi possible d'authentifier plusieurs personnes simultanément grâce à ce système. De plus, le procédé selon l'invention permet d'éviter que l'on trouve quelle modalité est erronée lorsque l'authentification échoue.

Les données pouvant être de différentes tailles et le procédé pouvant mettre en oeuvre différentes métriques ce qui peut impliquer des codes correcteurs ou des secure sketches différents. Le procédé permet de résoudre ce genre de problèmes car les secure sketches sont indépendants les uns des autres.

Traitement des modalités :

Quel que soit le type de modalités que l'on utilise (données biométriques ou PUFs), la taille de ces modalités n'est pas forcément adaptée à l'entrée des secure sketches. Pour combler cette lacune, nous proposons le schéma suivant représenté sur la figure 7 : on concatène toutes les modalités que l'on possède puis, pour chaque secure sketch, on prend des données de la taille souhaitée.

Les figures 8, 9 et 10 schématisent un exemple de procédé selon l'invention mettant en oeuvre une authentification croisée.

Authentification croisée :

Le principe de base est le suivant. On passe d'abord dans le secure sketche 1 $SS_1$ pour en déduire une première clé secrète $S_k^{(1)}$ que l'on applique avec la modalité 2 au secure sketch SSg2 puis, de là, on dérive une seconde clé secrète que l'on applique avec la première modalité pour obtenir la sortie.

L'exposant (i) indique que c'est la ième fois que l'on passe dans le secure sketch.

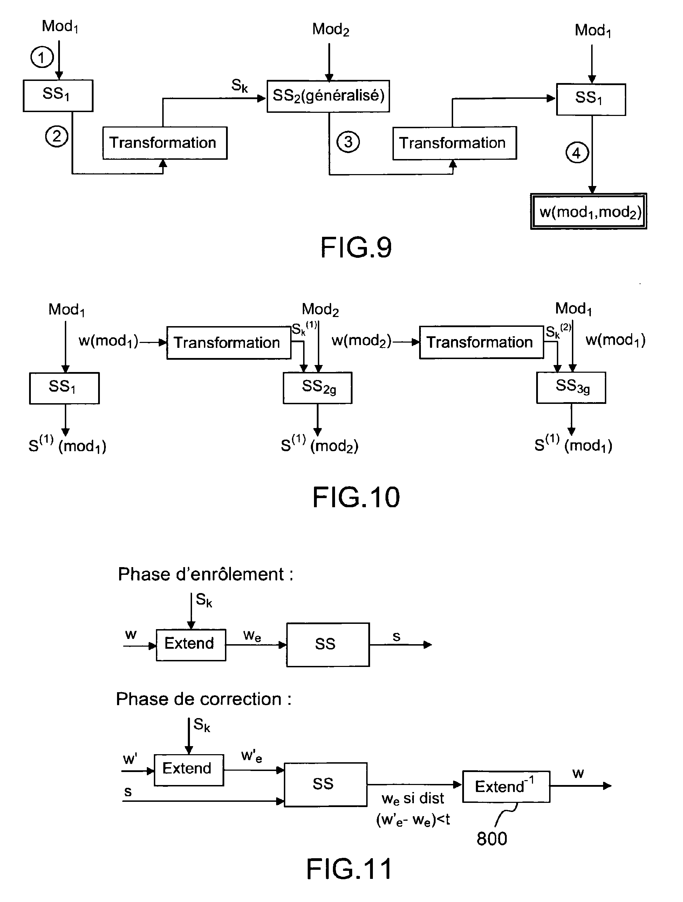

Les numéros entourés sur les figures représentent l'ordre de passage, la figure 9 étant une vision développée de la figure 8 et la figure 10, l'exemple dans le cas de la phase d'enrôlement. En ce qui concerne la phase d'enrôlement, on a besoin ici de trois sketches. Un pour la première utilisation de $SS_1$, un pour celle de $SS_2$ et un pour la deuxième utilisation de $SS_1$ qui dépend de la deuxième clé secrète.

La figure 8 montre qu'après l'étape 1, le $SS_1$ est un secure sketch standard, alors que lors du deuxième passage, c'est-à-dire après l'étape 3, celui-ci est un secure sketch généralisé car il prend une clé secrète en entrée.

La première solution, qui est la plus simple, est d'utiliser deux secures sketches différents $SS_1$ et $SS_3$.

Lorsque le procédé utilise pour la deuxième fois mod1 (avec SSg3), une solution consiste à garder la première mesure car cela permet de ne faire qu'une seule mesure pour chacune des modalités.

En notant $w^{(2)}(mod1) = w^{(1)}(mod1)$ si les mesures de mod1 sont correctes, si la mesure de la modalité 2 est fausse, alors la valeur de $w^{(2)}(mod1)$ sera différente de celle de $w^{(1)}(mod1)$. Le système global permet donc de retrouver la valeur de la mesure effectuée sur mod1 lors de l'enrôlement en fonction de la mesure de mod1 et mod2.

Sans sortir du cadre de l'invention, il est possible au lieu d'utiliser un secure sketch généralisé $SSg_3$ lors de la phase de l'enrôlement d'utiliser le premier secure sketch que l'on peut généraliser. Lors de la première utilisation, il est nécessaire d'avoir un secure sketch standard, la solution est alors de définir une clé $Sk^{(0)}$ qui peut être publique et qui sera utilisée lors de la première utilisation du $SSg_1$.

Selon un autre mode de réalisation, le procédé selon l'invention peut mettre en oeuvre des secure sketches généralisés recentrés définis en résumé de la manière suivante.

Un « secure sketch généralisé recentré » permet de retrouver toutes les propriétés du secure sketch standard sans les contraintes liées aux codes. Le principe mis en oeuvre de créer un secure sketch généralisé recentré qui consiste en un secure sketch généralisé suivi de la fonction $\text{Extend}_{Sk}^{-1}$ (800 figure 11) obtenue à partir de la fonction $\text{Extend}_{Sk}$. La fonction $\text{Extend}_{Sk}^{-1}$ permet notamment à la donnée en sortie du système de retrouver sa taille d'origine et de perdre sa dépendance en la clé $S_k$.

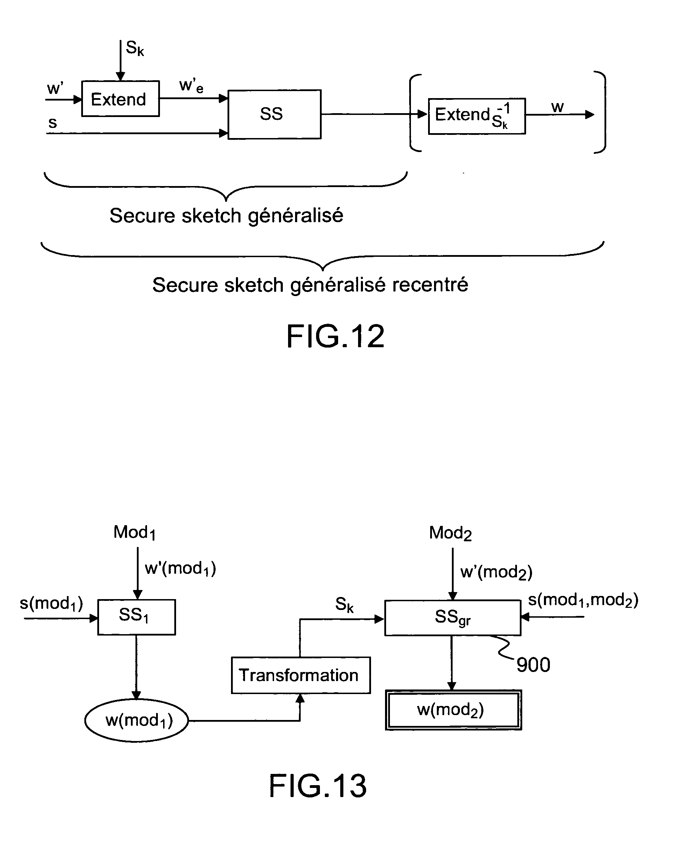

Une des applications possibles des secure sketches généralisés recentrés (abrégés SSgr dans la suite) est l'utilisation dans un système qui requiert un renouvellement régulier de la clé $S_k$ car, étant donné que la sortie du système est indépendante de $S_k$, le renouvellement est possible sans modifier la donnée en sortie du système. Cette application a un avantage certain lorsque la donnée en sortie sert à générer une clé cryptographique : il est alors possible de modifier $S_k$ sans modifier la clé cryptographique. La figure 12 représente schématiquement un diagramme montrant la différence entre les étapes mises en oeuvre pour un secure sketch généralisé et les étapes mises en oeuvre pour un secure sketch généralisé recentré.

**Propriétés de la fonction Extend :**

- Enrôlement : $\text{Extend}(w, S_k) = W_e$
- Correction : soit d la distance, on veut que $d(w_e, w_e') = d(\text{Extend}(w, S_k), \text{Extend}(w', S_k)) = d(w, w')$.

Si $d(\text{Extend}(w, S_k), \text{Extend}(w', S_k)) = d(w, w') < t$ (capacité de correction du code) alors $SS(s, \text{Extend}(w', S_k)) = w_e$

Dans les exemples qui suivent, la fonction Extend va être définie pour trois distances : distance de Hamming ($d_H$), différence symétrique ($d_\Delta$) et distance d'édition (dE). Ces distances correspondent aux secure sketches classiques existants.

Les fonctions Extend associées à ces distances seront respectivement notées $\text{Extend}_H$, $\text{Extend}_\Delta$ et $\text{Extend}_E$.

Définition : secure sketch généralisé recentré (SSgr) :

Comme il a été vu précédemment, la fonction Extend utilisée dans la définition des secure sketches généralisés est utilisée pour définir la fonction $\text{Extend}_{Sk}$. La définition de la fonction Extend dépend de la métrique utilisée. La fonction $\text{Extend}_{Sk}$ est inversible pour les distances de Hamming et d'édition. Il est alors possible d'appliquer son inverse $\text{Extend}_{Sk}^{-1}$ à la sortie du système pour inverser l'élongation de la donnée et perdre ainsi la dépendance en la clé $S_k$. Nous obtenons alors ce que nous appelons un secure sketch généralisé recentré (SSgr).

La donnée en sortie d'un secure sketch généralisé recentré est indépendante de la clé $S_k$ et possède la même taille que la donnée en entrée ce qui n'est pas le cas pour un secure sketch généralisé.

Rappel : $\text{Extend}_{Sk}(w) = \text{Extend}(w, S_k)$ et $\text{Extend}^{-1}_{Sk}(w)$ est l'inverse de $\text{Extend}_{Sk}(w)$.

Un secure sketch généralisé recentré est un secure sketch généralisé auquel on a ajouté la fonction $\text{Extend}_{Sk}^{-1}$ à la sortie. La donnée en sortie est exactement w (si w' assez proche de w) et ce indépendamment de la clé $S_k$.

Dans le cas du secure sketch généralisé recentré deux possibilités peuvent se présenter:

- $S_k$ publique : il n'est dans ce cas pas nécessaire d'avoir une clé $S_k$ de bonne qualité du point de vue de la sécurité (elle sert juste à s'affranchir des contraintes liées aux codes correcteurs) et on peut la stocker sans se soucier de sa protection.
- $S_k$ privée : le sortie du système reste indépendante de $S_k$ mais il n'est pas possible de corriger w' en w pour un attaquant qui ignore $S_k$.

De plus, la sécurité du secure sketch généralisé recentré est la même que celle d'un secure sketch, laquelle est maîtrisée.

Construction du secure sketch généralisé recentré dans le cas d'un espace muni de la distance de Hamming

Le secure sketch généralisé dans un espace de Hamming a sa fonction Extend $_{\{Sk,H\}}$ qui est inversible. Il est donc possible de dériver de ce secure sketch généralisé un secure sketch généralisé recentré SSgr.

Pour inverser cette fonction Extend $_{\{Sk,H\}}$, il suffit de supprimer les bits qui ont été rajoutés aux positions que l'on connaît grâce à $S_k$.

**Définition :** ($\text{Extend}^{-1}_{\{Sk,H\}}$)

On définit la fonction Extend $^{-1}_{\{Sk,H\}}$ qui prend en entrée $w_e \in F^n$ et un paramètre $S_k$ de la forme $S_k = [(pos_1,..., pos_k),(val_1,....,val_k)]$, en sortie on a un $w \in F^{n'}$ où $n = n' + k$, qui a les propriétés suivantes :

- Pour i=1 à k, supprimer les bits en position $pos_i$.
- Concaténer les bits restants dans leur ordre d'apparition.

Construction du secure sketch généralisé recentré dans le cas où l'espace est muni de la distance d'édition

La fonction Extend $_{\{Sk,E\}}$ est parfaitement inversible pour les mêmes raisons que dans le cas de la distance de Hamming. Il est donc possible de fabriquer un SSgr avec la distance d'édition. Il faut noter que cette fonction se base sur la chaîne de caractères la plus courte dans l'ensemble des chaînes possibles. Il est donc préférable que la chaîne la plus courte ait quand même une certaine longueur sinon on ne peut pas beaucoup jouer sur les $pos_i$. Dans le pire des cas, celui ou n=0, les $pos_i$ sont tous prédéterminés ($pos_i$=i ; il n'y a pas d'autre possibilité) mais il reste encore $|A|^k$ façons de réaliser l'extension sur les 0+k=k premiers bits.

**Définition :** (Extend$^{-1}_{\{Sk,E\}}$)

On définit la fonction Extend $^{-1}_{\{Sk,E\}}$ qui prend en entrée $w_e \in F^{n+k}$ et $S_k$ un paramètre de la forme $S_k =$ [$(pos_1,...,pos_k),(val_1,...,val_k)$], en sortie on a $w \in F^n$, qui a les propriétés suivantes :

- Pour i=1 à k, supprimer les bits en position $pos_i$.
- Concaténer les bits restants dans leur ordre d'apparition.

Quelques exemples de secure sketches généralisés recentrés ayant été donnés, la figure 13 montre un exemple de procédé d'authentification tel que décrit précédemment dans lequel un secure sketch généralisé est remplacé par un secure sketch généralisé recentré noté SSgr.

On remarque que la donnée en sortie d'un « étage » par exemple en sortie de $SS_2gr$ 900 ne dépend que la dernière modalité, i.e dans l'exemple, la modalité $mod_2$. Cependant le sketch $s(mod_1, mod_2)$ dépend toujours des deux modalités $mod_1$ et $mod_2$ car il corrige $w'e(mod_1, mod_2)$.

La modalité $mod_2$ ne peut être corrigée que si la modalité $mod_1$ était valide et la donnée en sortie est $w(mod_2)$, c'est-à-dire une donnée qui ne dépend que de la seconde modalité. Pour cela, on a appliqué la fonction Extend$^{-1}$ $_{Sk}$ à la donnée $w_e(mod_2)=w(mod_1,mod_2)$ ce qui a eu pour effet de supprimer les l'élongation dépendant de mod1 (qui était la seule dépendance en mod1 de la donnée). On retombe alors sur w(mod2), mesure corrigée de la modalité 2.

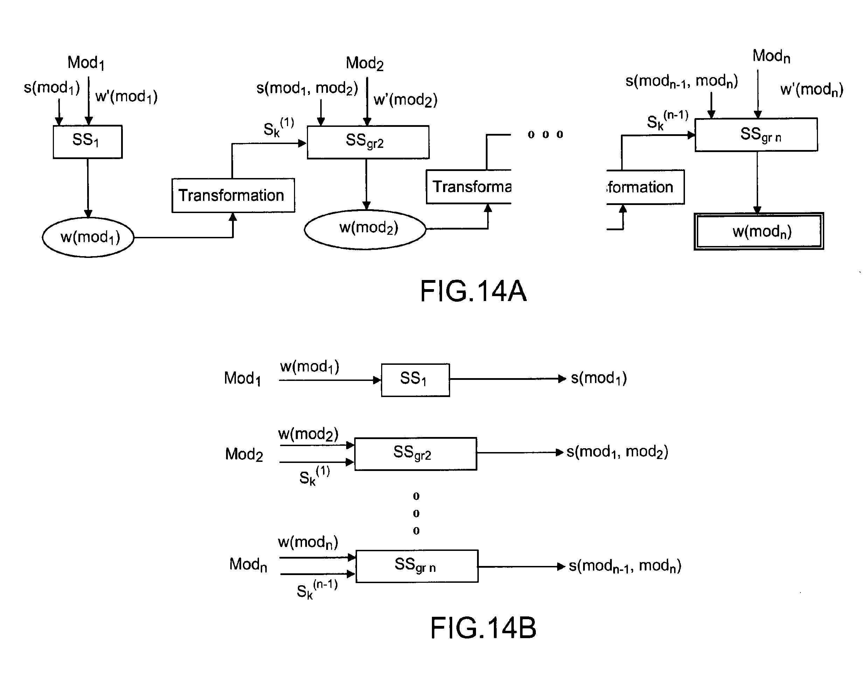

Sur la figure 14, les sketches ont aussi une perte de dépendance : le sketch du secure sketch généralisé associé à la modalité i ne dépend plus que de $mod_i$ et de $mod_{i-1}$. En effet, il dépend de $mod_i$ et de $S_k^{(i-1)}$ avec $S_k^{(i-1)}$ qui ne dépend plus désormais que de $mod_{i-1}$ (contrairement à la construction précédente où seuls des secure sketches généralisés étaient utilisés, le sketch dépendait alors de $mod_1$, ... $mod_i$).

Ce schéma peut être caractérisé avec le triplet (n,l,C) où n est le nombre total de secure sketches utilisés (secures sketches généralisés, secure sketches généralisés recentrés, secure sketch « classique » en position 1) et l est le nombre de secure sketches généralisés SSg comptés à partir de la fin du système immédiatement précédés par un SSgr. C est une chaîne de n-l+1 bits qui spécifie sur 2 bits pour le secure sketch 1 si c'est un SS (bits 11), un SSg (bits 00) ou un SSgr (bits 01) et sur 1 bit pour les secure sketches 2 à n-l si ce sont des SSg (bit à 0) ou des SSgr (bit à 1). Ce système correspond au triplet (n, 1, 11 1...1).

Les figures 14A et 14B schématisent l'enrôlement associé à l'utilisation de secure sketches généralisés recentrés.

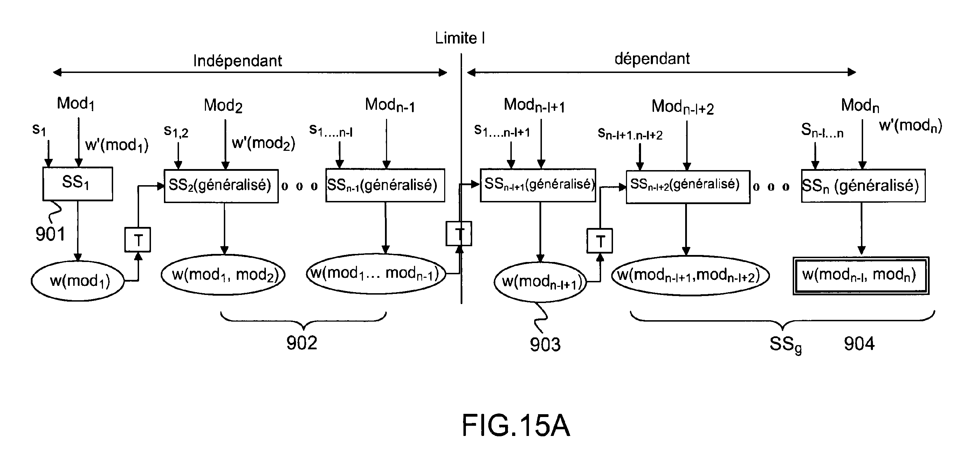

La figure 15A schématise un exemple de mise en oeuvre du procédé avec un certain nombre de modalités à authentifier dans le cas d'une utilisation d'une chaîne de traitement dans laquelle on utilise un secure sketch $SS_1$ 901 comme premier élément, suivi de plusieurs secure sketches généralisés $SSg_2$ à $SSg_{n-l}$, 902, suivi d'un secure sketch généralisé recentré $SSgr_{n-l+1}$, 903, suivi de plusieurs secure sketches généralisés $SSg_{n-l+2}$ à $SSg_n$, 904.

Problématique : un certain nombre de modalités doivent être authentifiées, n en l'occurrence, mais avec la condition que la donnée en sortie du système ne dépende que des l dernières modalités.

Lorsque l'on souhaite que la donnée en sortie ne dépende que des l dernières modalités (l pour limite), il suffit de perdre la dépendance sur la n-l+1 ième modalité en utilisant un secure sketch généralisé recentré SSgr à la n-l+1 ème place.

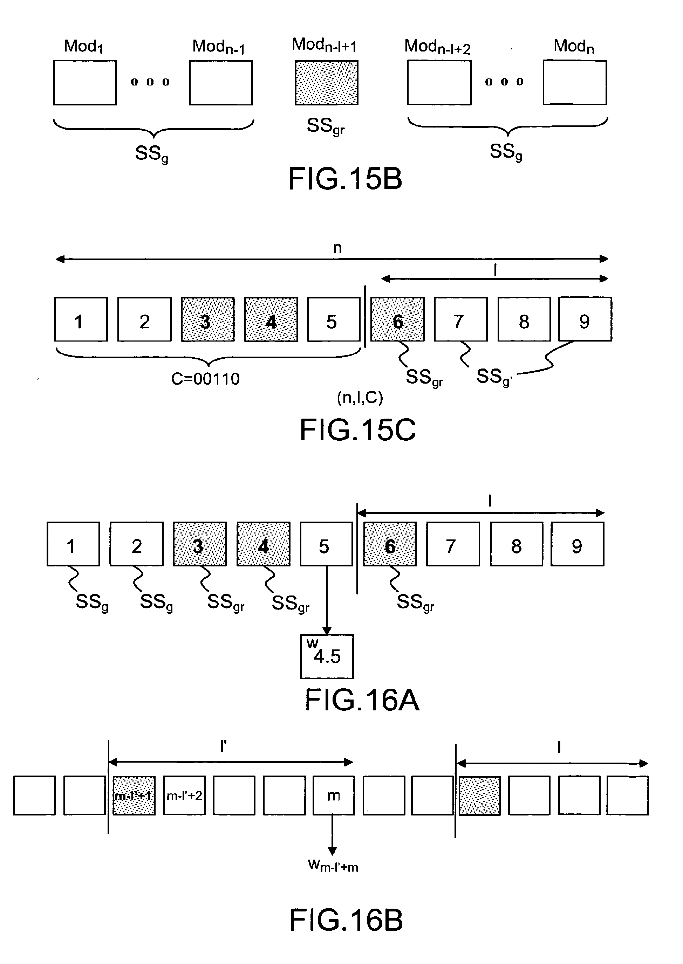

Ceci peut être schématisé sur les figures 15A et 15B, en représentant les secure sketches généralisés SSg et les secure sketches généralisés recentrés SSgr. On remarque que jusqu'à la modalité n-l les dépendances s'accumulent puis au niveau de la modalité n-l+1 on perd toutes les dépendances en les modalités précédentes. Cela est dû à la présence du secure sketch généralisé recentré sur la modalité n-l+1.

Remarque : l=n correspond au cas d'utilisation classique (la donnée en sortie du système dépend de toutes les modalités, i.e. les n dernières) et l=1 correspond au cas où la sortie du système ne dépend que de la dernière modalité.

Caractérisation : Le cas présenté sur la figure 15B est le cas optimal d'utilisation, il correspond au triplet (n, l, 00 0...0) que l'on pourra noter simplement (n,l).

Les figures 16A et 16B représentent un exemple de généralisation de l'utilisation de secure sketches généralisés et de secure sketches généralisés recentrés.

Le cas le plus général en utilisant à la fois des SSg et des SSgr est la possibilité que chaque secure sketch soit : soit un SSg soit un SSgr. Pour n secure sketches il y a donc 2" possibilités.
Cas particuliers :

- tous les SS sont des SSg : on est dans un premier cas de d'application
- tous les SS sont des SSgr : on est dans un deuxième cas d'utilisation
- un SSgr et les autres SS sont des SSg : on est dans le cas avec limite de dépendance (notée l).

Il est possible de modéliser ce cas général de la façon représentée à la figure 15C. La donnée en sortie du système dépend de la dernière modalité qui est en entrée d'un SSgr ainsi que toutes les modalités suivantes (les 4 derniers blocs sur le schéma). Une autre façon de voir les choses est que la donnée en sortie du système dépend de toutes les modalités en partant de la dernière tant que des SSg sont utilisés (en partant de la fin du système). Lorsque en partant de la fin du système on tombe sur un SSgr, la donnée en sortie en dépend mais ne dépendra pas des modalités qui ont un indice inférieur (ou une numérotation inférieure).
Ainsi, si la i-ème modalité est utilisée avec un SSgr et que les modalités suivantes notées i+1 à n sont toutes utilisées avec un SSg, alors la sortie du système va dépendre des modalités i à n.
Avec la caractérisation choisie précédemment, le système (n,l,C) peut être représenté à la figure 16A. Les figures 16A et 16B représentent un exemple dans le cas d'un triplet (n, l, C).
Rappel : on définit le système par les trois paramètres suivants :

- n : nombre de secure sketches (SS, SSg ou SSgr) utilisés
- l : la limite, correspond à la plus longue chaîne de SSg en partant de la fin et en incluant le premier SSgr.
- C : chaîne de n-l+1 bits qui représentent les n-l premiers SS (sur 2 bits pour le premier SS et 1 bit pour chacun des SSi pour i=2 à n-l)(voir description complète plus haut).

Dans le cas d'utilisation que nous définissons comme optimal, C=00 0...0, c'est-à-dire qu'il y a un SSgr en position n-l+1 et que tous les autres blocs sont des SSg.
Il est cependant possible d'avoir à la fois des SSg et des SSgr avant la limite (l).

Par exemple si on souhaite extraire une donnée qui ne dépend que des modalités 4 et 5 avec authentification des 5 premières modalités, on place un SSgr en position 4 et un SSg en position 5. On récupère ensuite la donnée en sortie du SSg5 figure 16A.

Plus généralement, figure 16B, pour récupérer une donnée avant la limite qui dépend de l' modalités et qui nécessite l'authentification multimodale des m premières modalités, on place un SSgr en position m-l'+1 et des SSg aux positions m-l'+2, ..., m. On peut réitérer le processus sur les modalités qui précèdent la limite l'.

Dans le cas extrême où l'on souhaite obtenir une donnée qui ne dépend que de la modalité m mais qui nécessite l'authentification des m premières modalités, il suffit de placer un secure sketch généralisé recentré (SSgr) en position m. Le type des autres blocs (SSg ou SSgr) n'a alors aucun influence sur la dépendance de cette donnée.

La variante de mise en oeuvre qui consiste à utiliser uniquement des secure sketches généralisés recentrés (SSgr) offre notamment les avantages suivants :

• Chaque donnée intermédiaire ne dépend que de la modalité courante,
• Chaque sketch dépend de la modalité courante ainsi que de la modalité précédente,
• La donnée en sortie du système ne dépend que de la dernière modalité : préférable si on est susceptible de changer une modalité (sauf la dernière) sans changer la donnée en sortie du système, et
• En cas de modification/remplacement d'une modalité : refaire l'enrôlement de la modalité suivante, les autres restes inchangés.

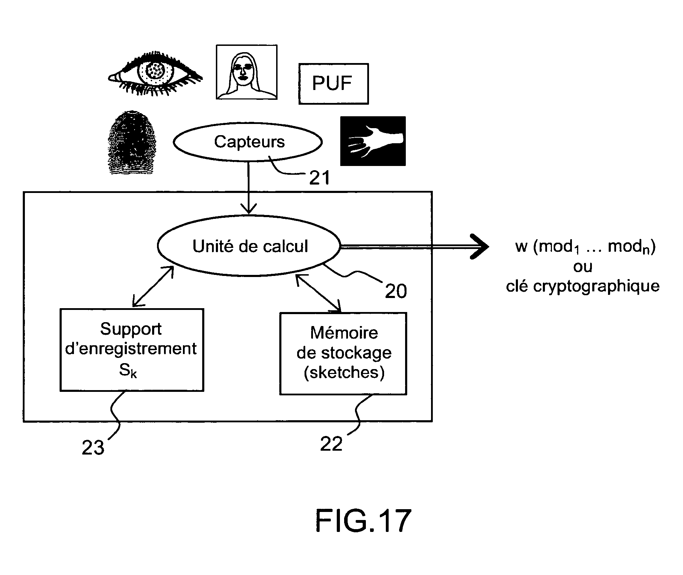

La figure 17 représente un exemple de dispositif permettant la mise en oeuvre du procédé selon l'invention.

Le dispositif d'authentification selon l'invention comprend une unité de calcul 20 qui contient les différents SS implémentés pour les deux phases (enrôlement et correction) ainsi que la fonction 'T' et une fonction de hachage si on souhaite générer une clé cryptographique.

Dans la phase d'initialisation, les modalités issues des capteurs 21 sont traitées dans l'unité de calcul 20 avec les SS en phase d'enrôlement puis les sketches sont stockés dans une mémoire de stockage 22. Les clés secrètes Sk calculées sont enregistrées sur un support d'enregistrement 23 et sont effacées dès qu'elles ne sont plus nécessaires. Dans la phase de fonctionnement de l'invention, l'unité de calcul 20 se sert des modalités mesurées et des sketches stockés pour générer à nouveau les Sk, débruiter les modalités et retourner w(mod1,...,modn) ou bien une clé cryptographique.

Le procédé et le système selon l'invention présentent notamment les avantages suivants :

- Une indépendance vis-à-vis des moyens techniques générant les modalités,
- La taille des modalités et les métriques utilisées pouvant être différentes, utilisation de codes correcteurs différents,
- Intégrable dans un système multimodal existant,
- En cas d'échec de l'authentification, l'erreur est propagée en fin de chaîne.

## Revendications

1. Procédé d'authentification multimodale d'individus ou d'objets, ou conjointement d'individus et d'objets, ledit individu ou ledit objet étant caractérisé ou associé à une ou plusieurs modalités modi, avec i allant de 2 à n comportant

   a) la connaissance d'un ensemble de mesures des n modalités et des sketches correspondant à chacune des modalités s(mod1), s(mod1,mod2), ..., s(mod1,...,modi), ..., s(mod1,...,modn),
   **caractérisé en ce qu'**il comporte au moins les étapes suivantes :
   b) une étape de mesure de la donnée floue ou bruitée w'(mod1) (310) correspondant à une première modalité mod1,
   c) la correction (301) de la mesure de la première modalité w'(mod1) au moyen d'un secure sketch $SS_1$ qui prend en entrée la mesure bruitée w'(mod1) et le sketch s(mod1) (302) correspondant à la modalité 1, afin d'obtenir une mesure corrigée ou débruitée w(mod1) (311),
   d) transformer la donnée w(mod1) en utilisant une fonction de transformation non inversible afin de trouver une première clé secrète $S_k^{(1)}$, c'est-à-dire qu'à partir de la connaissance de $S_k^{(1)} = [(pos_1; ...; pos_k); (val_1; ...; val_k)]$ il n'est pas possible de retrouver de l'information concernant la donnée w,
   réitérer les étapes suivantes e) à h) tant que i est inférieur ou égal à n, nombre de modalités fixé initialement,
   e) effectuer une mesure d'une ième modalité ou w'(modi),
   f) corriger ladite ième modalité w'(modi) (317) avec i supérieur ou égal à 2 et inférieur ou égal à n le nombre de modalités choisies pour l'authentification en exécutant les étapes suivantes :
   g) utiliser la clé $S_k^{(i-1)}$ obtenue en appliquant la fonction de transformation sur la modalité w'(mod$_i$) afin de générer une donnée étendue w'e(modi) en augmentant la taille de la donnée de référence avec k chiffres composant la clé $S_k^{(i-1)}$,
   h) déterminer à partir de la donnée étendue w'e(modi) et du sketch s(mod1,..., modi) (318) la valeur débruitée étendue we(mod1 modi),
   i) utiliser le mot we(mod1,...modn) afin d'authentifier l'utilisateur ou l'objet correspondant aux n modalités mesurées ou afin de générer une clé cryptographique.

2. Procédé d'authentification selon la revendication 1 **caractérisé en ce que** ladite fonction de transformation 'T' prend en entrée une donnée w = w$_1$,...,w$_m$ et génère une clé $S_k = [(pos_1; ...; pos_k); (val_1; ...; val_k)]$ où les val$_i$ sont des bits et les pos$_i$ représentent les positions des bits de valeur val$_i$, les k positions étant choisies parmi n emplacements et **en ce que** ladite fonction de transformation 'T' présente les propriétés suivantes :

   a. Non-inversibilité, c'est-à-dire qu'à partir de la connaissance de $S_k = [(pos_1; ...; pos_k); (val_1; ...; val_k)]$ il n'est pas possible de retrouver de l'information concernant la donnée w,
   Soient $w \in \{0;1\}^m$ et $S_k \in P^k \times \{0;1\}^k$ tels que $S_k = T(w)$, alors $\forall\, S_k$, H(w) = m,
   b. Probabilités de distributions uniformes sur les valeurs de val, de pos et sur l'union de ces deux valeurs avec :

$$-\forall i \in \{1;...;k\}, \forall VAL \in \{0;1\}^k, P[val_i = VAL] = \frac{1}{2^k}$$

$$-\forall i \in \{1;...;k\}, \forall POS \in P, P[pos_i = POS] = \frac{1}{n}$$

$$-\forall i \in \{1;...;k\}, \forall VAL \in \{0;1\}^{k}, \forall POS \in P, P[val_i = VAL, pos_i = POS] = \frac{1}{n * 2^{k}}$$

3. Procédé selon la revendication 1 **caractérisé en ce qu'**il utilise une fonction de transformation 'T' pouvant être définie de la manière suivante : à partir d'une donnée $w=w_1...w_m$, déduire une « clé secrète » $S_k$ $=[(pos_1,...,pos_k) ; ( val_1,...,val_k)]$ uniforme,
**Phase 1** : Détermination des $val_i$
choisir une fonction de hachage h $:\{0 ;1\}^* \rightarrow \{0 ;1\}^{k+\varepsilon}$, $\varepsilon \in N^*$. Pour i=1 à k, $val_i=(h(w))_i$,

Phase 2 : Détermination des $pos_i$ en se basant sur l'algorithme KSA de génération de permutation du RC4,
S est un tableau de n cases indexées de 0 à n-1,
choisir une fonction de hachage h et poser K=h(w),
découper ensuite K en paquets de $\lceil \log_2 n \rceil$ bits où $\lceil . \rceil$ désigne le plus petit entier supérieur ou égal à x. Si le dernier paquet ne contient pas exactement $\lceil \log_2 n \rceil$ bits, ne pas conserver ledit paquet,
poser ensuite key[0] le premier paquet (en base 10), key[1] le deuxième, etc. Soit keylength le nombre de paquets.

```
pour i=0 à n-1
        S[i] :=i
p:=0
pour i=0 à n-1
        j:=(j+S[i]+key[i mod keylength]) mod n
        Inverser les valeurs de S[i] et de S[j]
```

S représente au final une permutation de {0,...,n-1},
prendre ensuite une liste publique de k indices et l'image de chacun de ces éléments par S contient une des k positions cherchées.

4. Procédé selon la revendication 1 **caractérisé en ce que** le premier secure sketch $SS_1$ un secure sketch généralisé.

5. Procédé selon l'une des revendications 1 à 3 **caractérisé en ce qu'**il comporte l'utilisation d'un secure sketch généralisé recentré composé d'un secure sketch généralisé auquel il a été ajouté une fonction $Extend_{Sk}^{-1}$ à la sortie, ledit secure sketch généralisé recentré étant disposé au niveau de la mesure de la n-l+1 ième modalité, les n-l modalités mesurées utilisant des secure sketches généralisés.

6. Procédé selon la revendication 5 **caractérisé en ce qu'**il comporte au moins les étapes suivantes :

soit :

- n : nombre total de secure sketches classiques notés SS, généralisés notés SSg ou recentrés notés SSgr utilisés, seul le premier de la chaîne est un secure sketch classique,
- l : la limite, correspond à la plus longue chaîne de SSg en partant de la fin et en incluant le premier SSgr,
- C : chaîne de n-l+1 bits qui représentent les n-l premiers SS (2 bits pour le premier SS secure sketch classique, SSg ou SSgr et 1 bit pour chacun des SS 2 à n-l, et

positionner un SSgr en position n-l+1 et pour tous les autres blocs des SSg, récupérer la donnée en sortie du $SSg_n$.

7. Procédé selon la revendication 6 **caractérisé en ce qu'**il comporte au moins les étapes suivantes pour récupérer une donnée qui dépend de l' modalités disposées avant la limite l et qui nécessite l'authentification multimodale des m premières modalités, placer un SSgr en position m-l'+1 et des SSg aux positions m-l'+2, ..., m.

8. Procédé selon la revendication 6 **caractérisé en ce qu'**il comporte au moins les étapes suivantes pour obtenir une donnée qui ne dépend que de la modalité m mais qui nécessite l'authentification des m premières modalités :

disposer un secure sketch généralisé recentré (SSgr) en position m, le type des autres blocs (SSg ou SSgr) n'a alors aucun influence sur cette donnée.

9. Procédé selon l'une des revendications 1 à 3 **caractérisé en ce qu'**il met en oeuvre un principe d'authentification croisée comprenant au moins les étapes suivantes : passer d'abord dans le premier secure sketch SS1, afin d'en déduire une première clé secrète Sk$^{(1)}$, appliquer ladite première clé secrète à la deuxième modalité mod2, puis dériver une seconde clé secrète à appliquer à la première modalité mod1 afin d'obtenir la valeur de w$^{(2)}$(mod1, mod2), l'exposant (2) signifiant que c'est la deuxième fois que la modalité 1 est utilisée dans le processus.

10. Procédé d'authentification multimodale d'individus ou d'objets, ou conjointement d'individus et d'objets, ledit individu ou ledit objet étant caractérisé ou associé à une ou plusieurs modalités modi, avec i allant de 2 à n **caractérisé en ce qu'**il comporte au moins les étapes suivantes :

a) la connaissance d'un ensemble de mesures des n modalités et des sketches correspondant à chacune des modalités s(mod1), s(mod1,mod2), ..., s(mod1,...,modi), ..., s(mod1,...,modn),
b) une étape de mesure de la donnée floue ou bruitée h(w'(mod1)) correspondant à une première modalité mod1, où h est une fonction de hachage,
c) la correction (301) de la mesure de la première modalité h(w'(mod1)) au moyen d'un extracteur flou généralisé $SS_1$ qui prend en entrée la mesure bruitée h(w'(mod1)) et le sketch s(mod1) (302) correspondant à la modalité 1, afin d'obtenir une mesure corrigée ou débruitée h(w(mod1)) (600),
d) transformer la donnée h(w(mod1)) en utilisant une fonction de transformation non inversible afin de trouver une première clé secrète $S_k^{(1)}$, c'est-à-dire qu'à partir de la connaissance de $S_k^{(1)} = [(pos_1; ...; pos_k); (val_1; ...; val_k)]$ il n'est pas possible de retrouver de l'information concernant la donnée w,
réitérer les étapes e) à h) tant que i est inférieur ou égal à n, nombre de modalités fixé initialement,
e) effectuer une mesure d'une ième modalité ou h(w'(modi)),
f) corriger ladite ième modalité h(modi)) avec i supérieur ou égal à 2 et inférieur ou égal à n le nombre de modalités choisies pour l'authentification en exécutant les étapes suivantes :
g) utiliser la clé $S_k^{(i-1)}$ obtenue en appliquant la fonction de transformation sur la modalité h(w'modi)) afin de générer une donnée étendue h(w'e(modi)) en augmentant la taille de la donnée de référence avec k chiffres composant la clé $S_k^{(i-1)}$,
h) déterminer à partir de la donnée étendue h(w'e(modi)) et du sketch s(mod1,..., modi) (318) la valeur débruitée étendue h(we(mod1,..., modi)),
i) utiliser le mot h(we(mod1,...modn)) afin d'authentifier l'utilisateur ou l'objet correspondant aux n modalités mesurées ou afin de générer une clé cryptographique.

11. Utilisation du procédé selon l'une des revendications précédentes pour authentifier un individu à partir de plusieurs modalités choisies parmi la liste suivante: la voix, les empreintes digitales, l'iris, la rétine, le visage... la réponse de PUFs , la combinaison des biométries et des réponses de PUFs ou tout autre type de données floues.

## Patentansprüche

1. Verfahren zum multimodalen Authentifizieren von Personen oder Objekten oder von Personen und Objekten in Kombination, wobei die Person oder das Objekt mit einem oder mehreren Modalitätsmodi charakterisiert oder assoziiert ist, wobei i von 2 bis n geht, das Folgendes beinhaltet:

a) Kennen eines Satzes von Messwerten von n Modalitäten und von Sketchen, die jeder der Modalitäten s(mod1), s(mod1, mod2),..., s(mod1,..., modi), ..., s(mod1,..., modn) entsprechen,
**dadurch gekennzeichnet, dass** es wenigstens die folgenden Schritte beinhaltet:
b) einen Schritt des Messens von Fuzzy- oder verrauschten Daten w'(mod1) (310), die einer ersten Modalität mod1 entsprechen;
c) Korrigieren (301) des Messwertes der ersten Modalität w'(mod1) mit Hilfe eines sicheren Sketch $SS_1$, der den verrauschten Messwert w'(mod1) und den Sketch s(mod1) (302), der der Modalität 1 entspricht, als Eingang erhält, um einen korrigierten oder entrauschten Messwert w(mod1) (311) zu erhalten;
d) Transformieren der Daten w(mod1) mit einer nicht umkehrbaren Transformationsfunktion, um einen ersten Geheimschlüssel $S_k^{(1)}$ wiederzufinden, d.h. dass es auf der Basis der Kenntnis von $S_k^{(1)} = [(pos_1;...;pos_k); (val_1;...;val_k)]$ nicht möglich ist, Informationen über die Daten w wiederzufinden;
Wiederholen der folgenden Schritte e) bis h), wobei i gleich oder kleiner als n ist, mit einer anfänglich festgelegten Zahl von Modalitäten;

e) Messen einer i-ten Modalität oder w'(modi);

f) Korrigieren der i-ten Modalität w'(modi) (317), wobei i gleich oder größer als 2 und gleich oder kleiner als n ist, Anzahl von zur Authentifizierung gewählten Modalitäten, durch Ausführen der folgenden Schritte:

g) Benutzen des Schlüssels $S_k^{(i-1)}$, erhalten durch Anwenden der Transformationsfunktion auf die Modalität w'(modi), um erweiterte Daten w'e(modi) zu erzeugen, durch Erhöhen der Größe der Referenzdaten mit k Ziffern, aus denen sich der Schlüssel $S_k^{(i-1)}$ zusammensetzt;

h) Ermitteln, auf der Basis der erweiterten Daten w'e(modi) und des Sketch s(mod1,..., modi) (318), des erweiterten entrauschten Wertes we(mod1,...modi);

i) Benutzen des Wortes we(mod1,...modn), um den Benutzer oder das Objekt zu authentifizieren, das (der) den n gemessenen Modalitäten entspricht, oder um einen kryptografischen Schlüssel zu erzeugen.

2. Authentifizierungsverfahren nach Anspruch 1, **dadurch gekennzeichnet, dass** die Transformationsfunktion 'T' als Eingang Daten w = $w_1,...,w_m$ erhält und einen Schlüssel $S_k = [(pos_1;...;pos_k); (val_1;...;val_k)]$ erzeugt, wobei $val_i$ Bits sind und $pos_i$ die Positionen der Bits von Wert $val_1$ repräsentieren, wobei die k Positionen aus n Stellen ausgewählt sind, und dadurch, dass die Transformationsfunktion 'T' die folgenden Eigenschaften hat:

a. Nichtumkehrbarkeit, d.h., dass es auf der Basis der Kenntnis von $S_k = [(pos_1;...;pos_k); (val_1;...;val_k)]$ nicht möglich ist, Informationen über die Daten w wiederzufinden,

es sei $w \in \{0;1\}^m$ und $S_k \in P^k \times \{0;1\}^k$, so dass $S_k = T(w)$, dann V $S_k$, H(w) = m;

b. Wahrscheinlichkeiten von gleichförmigen Verteilungen an den Werten von val, pos und an der Vereinigung dieser beiden Werte mit:

$$-\forall i \in \{1;...;k\}, \forall VAL \in \{0;1\}^k, P[val_i = VAL] = \frac{1}{2^k}$$

$$-\forall i \in \{1;...;k\}, \forall POS \in P, P[pos_i = POS] = \frac{1}{n}$$

$$-\forall i \in \{1;...;k\}, \forall VAL \in \{0;1\}^k, \forall POS \in P, P[val_i = VAL, pos_i = POS] = \frac{1}{n*2^k}$$

3. Verfahren nach Anspruch 1, **dadurch gekennzeichnet, dass** es eine Transformationsfunktion 'T' benutzt, die wie folgt definiert werden kann: Ableiten, auf der Basis von Daten w=$w_1,...w_m$, eines gleichförmigen "Geheimschlüssels" $S_k = [(pos_1;...;pos_k); (val_1;...;val_k)]$;

**Phase 1:** Ermitteln von $val_i$

Auswählen einer Hash-Funktion h: $\{0; 1\}^* \rightarrow \{0; 1\}^{k+\varepsilon}$, $\varepsilon \in N^*$; für i=1 bis k, $val_i=(h(w))_i$;

**Phase 2:** Ermitteln von $pos_i$ auf der Basis des KSA-Algorithmus zum Erzeugen von Permutation von RC4,

S ist eine Tabelle von n Kästen, indexiert von 0 bis n-1,

Auswählen einer Hash-Funktion h und Setzen von K=h(w),

nachfolgendes Unterteilen von K in Pakete von $\lceil log_2 n \rceil$ Bits, wobei $\lceil . \rceil$ die kleinste ganze Zahl bezeichnet, die gleich oder größer als x ist,

wenn das letzte Paket nicht genau $\lceil log_2 n \rceil$ Bits enthält, das Paket nicht mehr verwenden,

Setzen von Schlüssel [0] als das erste Paket (Basis 10), Schlüssel [1] als das zweite usw.,

es sei Keylength die Anzahl von Paketen,

$$\text{für } i=0 \text{ bis } n-1$$
$$S[i]:=i$$
$$p:=0$$
$$\text{für } i=0 \text{ bis } n-1$$
$$j:=(j+S[i]+key\{i \bmod keylength]) \bmod n$$
$$\text{Umkehren der Werte von } S[i] \text{ und von } S[j]$$

wobei S schließlich eine Permutation von {0,..., n-1} repräsentiert,
nachfolgend Nehmen einer öffentlichen Liste von k Indexen, wobei das Bild jedes dieser Elemente durch S eine der gesuchten Positionen k enthält.

4. Verfahren nach Anspruch 1, **dadurch gekennzeichnet, dass** der erste sichere Sketch $SS_1$ ein verallgemeinerter sicherer Sketch ist.

5. Verfahren nach einem der Ansprüche 1 bis 3, **dadurch gekennzeichnet, dass** es die Verwendung eines neu zentrierten verallgemeinerten sicheren Sketch ist, gebildet durch einen verallgemeinerten sicheren Sketch, dem eine $\text{Extend}_{Sk}^{-1}$ Funktion am Ausgang hinzugefügt wurde, wobei der neu zentrierte verallgemeinerte sichere Sketch am Messwert der n-1+1-ten Modalität angeordnet ist, wobei die n-1 gemessenen Modalitäten verallgemeinerte sichere Sketche benutzen.

6. Verfahren nach Anspruch 5, **dadurch gekennzeichnet, dass** es wenigstens die folgenden Schritte beinhaltet:

   es sei:

   - n die Gesamtzahl von herkömmlichen sicheren Sketches, mit SS notiert, von verallgemeinerten, mit SSg notiert, oder von neu zentrierten, mit SSgr notiert, wobei nur der erste aus der Kette ein herkömmlicher sicherer Sketch ist;
   - 1 die Grenze, die der längsten Kette von SSg entspricht, beginnend am Ende und das erste SSgr beinhaltend;
   - C die Kette von n-1+1 Bits, die die n-i ersten SS repräsentieren (2 Bits für den ersten herkömmlichen sicheren Sketch SS, SSg oder SSgr und 1 Bit für jeden der SS 2 bis n-1),

   positionieren eines SSgr an Position n-1+1 und für alle anderen Blöcke von SSG, Sammeln der Daten am Ausgang von $SSg_n$.

7. Verfahren nach Anspruch 6, **dadurch gekennzeichnet, dass** es wenigstens die folgenden Schritte zum Sammeln von Daten beinhaltet, die von den 1' Modalitäten vor der Grenze 1 abhängig sind und die die multimodale Authentifizierung der m ersten Modalitäten erfordern, Setzen eines SSgr an Position m-1'+1 und SSg an Position m-l'+2,..., m.

8. Verfahren nach Anspruch 6, **dadurch gekennzeichnet, dass** es wenigstens die folgenden Schritte zum Einholen von Daten beinhaltet, die nur von der Modalität m abhängen, aber die Authentifizierung der m ersten Modalitäten erfordern: Setzen eines neu zentrierten verallgemeinerten sicheren Sketch (SSgr) an Position m, dann hat der Typ der anderen Blöcke (SSg oder SSgr) keinen Einfluss auf diese Daten.

9. Verfahren nach einem der Ansprüche 1 bis 3, **dadurch gekennzeichnet, dass** es ein gekreuztes Authentifizierungsprinzip implementiert, das wenigstens die folgenden Schritte beinhaltet: zunächst Durchlaufen des ersten sicheren Sketch SS1, um davon einen ersten Geheimschlüssel $Sk^{(1)}$ abzuleiten, Anwenden des ersten Geheimschlüssels auf die zweite Modalität mod2, dann Ableiten eines zweiten Geheimschlüssels zum Anwenden auf die erste Modalität mod1, um den Wert von $w^{(2)}$ (mod1, mod2) zu erhalten, wobei Exponent (2) bedeutet, dass dies das zweite Mal ist, an dem die Modalität 1 in dem Verfahren benutzt wurde.

10. Verfahren zum multimodalen Authentifizieren von Personen oder Objekten oder von Personen und Objekten in Kombination, wobei die Person oder das Objekt mit einer oder mehreren Modalitätenmodi charakterisiert oder assoziiert ist, wobei i im Bereich von 2 bis n ist, **dadurch gekennzeichnet, dass** es wenigstens die folgenden Schritte beinhaltet:

a) Kennen eines Satzes von Messwerten der n Modalitäten und von Sketchen, die jeder der Modalitäten s(mod1), s(mod1, mod2),..., s(mod1,...modi), ..., s(mod1,...,modn) entsprechen,

b) einen Schritt des Messens der Fuzzy- oder verrauschten Daten h(w'(mod1)), die einer ersten Modalität mod1 entsprechen, wobei h eine Hash-Funktion ist;

c) Korrigieren (301) des Messwertes der ersten Modalität h(w'(mod1)) mittels eines verallgemeinerten Fuzz-Extraktors $SS_1$, der den verrauschten Messwert h(w'(mod1)) und den Sketch s(mod1) (302), der der Modalität 1 entspricht, am Eingang erhält, um einen korrigierten oder entrauschten Messwert h(w(mod1)) (600) zu erhalten;

d) Transformieren der Daten h(w(mod1)) unter Verwendung einer nicht umkehrbaren Transformationsfunktion, um einen ersten Geheimschlüssel $S_k^{(1)}$ wiederzufinden, d.h. dass es auf der Basis der Kenntnis von $S_k^{(1)} = [(pos_1;...;pos_k); (val_1;...;val_k)]$ nicht möglich ist, Informationen über die Daten w wiederzufinden;

Wiederholen der nächsten Schritte e) bis h), wobei i gleich oder kleiner als n ist, die anfänglich festgelegte Anzahl von Modalitäten;

e) Messen einer i-ten Modalität oder h(w'(modi));

f) Korrigieren der i-ten Modalität h(w'(modi)), wobei i gleich oder größer als 2 und gleich oder kleiner als n ist, die festgelegte Zahl von für die Authentifizierung ausgewählten Modalitäten, unter Ausführung der folgenden Schritte:

g) Benutzen des Schlüssels $S_k^{(i-1)}$, erhalten durch Anwenden der Transformationsfunktion auf die Modalität h(w'(mod1)), um erweiterte Daten h(w'e(modi)) zu erzeugen, durch Vergrößern der Referenzdaten mit k Ziffern, die den Schlüssel $S_k^{(i-1)}$ bilden;

h) Ermitteln, auf der Basis der erweiterten Daten h(w'e(modi)) und des Sketch s(mod1,...modi) (318), des erweiterten entrauschten Wertes h(we(mod1,...modi));

i) Benutzen des Wortes h(we(mod1,...modn)), um den Benutzer oder das Objekt, das (der) n gemessenen Modalitäten entspricht, zu authentifizieren oder um einen kryptografischen Schlüssel zu erzeugen.

**11.** Anwendung des Verfahrens nach einem der vorherigen Ansprüche zum Authentifizieren einer Person auf der Basis von mehreren Modalitäten, ausgewählt aus der folgenden Liste: Sprache, Fingerabdrücke, Iris, Retina, Gesicht usw., Antwort auf PUFs, Kombination von Biometrien und Antworten auf PUFs oder ein beliebiger anderer Typ von Fuzzy-Daten.

**Claims**

**1.** A method for the multimodal authentication of individuals or objects, or of individuals and objects combined, with said individual or said object being characterised or associated with one or more modalities modi, with i ranging from 2 to n, comprising:

a) knowing a set of measurements of the n modalities and sketches corresponding to each of the modalities s(mod1), s(mod1, mod2),..., s(mod1,..., modi), ..., s(mod1,..., modn),
**characterised in that** it comprises at least the following steps:
b) a step of measuring fuzzy or noisy data w'(mod1) (310) corresponding to a first modality mod1;
c) correcting (301) the measurement of the first modality w'(mod1) by means of a secure sketch $SS_1$, which takes as input the noisy measurement w'(mod1) and the sketch s(mod1) (302) corresponding to modality 1, so as to obtain a corrected or denoised measurement w(mod1) (311);
d) transforming the data w(mod1) using a non-reversible transformation function so as to find a first secret key $S_k^{(1)}$, i.e. that on the basis of the knowledge of $S_k^{(1)} = [(pos_1;...;pos_k); (val_1;...;val_k)]$ it is not possible to retrieve information relating to the data w;
repeating the next steps e) to h) as long as i is less than or equal to n, the initially set number of modalities;
e) measuring an i-nth modality or w'(modi);
f) correcting said i-nth modality w'(modi) (317), with i being greater than or equal to 2 and less than or equal to n, the number of modalities selected for the authentication, by executing the following steps:
g) using the key $S_k^{(i-1)}$ obtained by applying the transformation function to the modality w'(modi) so as to generate extended data w'e(modi) by increasing the size of the reference data with k digits composing the key $S_k^{(i-1)}$;
h) determining, on the basis of the extended data w'e(modi) and of the sketch s(mod1,..., modi) (318), the extended denoised value we(mod1,...modi);
i) using the word we(mod1,...modn) so as to authenticate the user or the object corresponding to the n measured modalities or so as to generate a cryptographic key.

2. The authentication method according to claim 1, **characterised in that** said transformation function 'T' takes as input data w = $w_1,...,w_m$ and generates a key $S_k$ = [(pos$_1$;...;pos$_k$); (val$_1$;...;val$_k$)] where the val$_i$ are bits and the pos$_i$ represent the positions of bits of value val$_1$, with the k positions being selected from n locations, and **in that** said transformation function 'T' has the following properties:

a. non-reversibility, i.e. that on the basis of the knowledge of $S_k$ = [(pos$_1$;...;pos$_k$); (val$_1$;...;val$_k$)] it is not possible to retrieve information relating to the data w,
where w $\in \{0;1\}^m$ and $S_k \in P^k x \{0;1\}^k$ such that $S_k$ = T(w), then V $S_k$, H(w) = m;
b. probabilities of uniform distributions on the val, pos values and on the combination of these two values with:

$$-\forall i \in \{1;...;k\}, \forall VAL \in \{0;1\}^k, P[val_i = VAL] = \frac{1}{2^k}$$

$$-\forall i \in \{1;...;k\}, \forall POS \in P, P[pos_i = POS] = \frac{1}{n}$$

$$-\forall i \in \{1;...;k\}, \forall VAL \in \{0;1\}^k, \forall POS \in P, P[val_i = VAL, pos_i = POS] = \frac{1}{n * 2^k}$$

3. The method according to claim 1, **characterised in that** it uses a transformation function 'T' that can be defined as follows: on the basis of data w=$w_1,\cdots w_m$, deducing a uniform "secret key" $S_k$ = [(pos$_1$;...;pos$_k$); (val$_1$;...;val$_k$)];
**Phase 1:** determining val$_i$
selecting a hash function h:$\{0; 1\}^* \rightarrow \{0; 1\}^{k+\varepsilon}$, $\varepsilon \in N^*$; for i=1 to k, val$_i$=(h(w))$_i$; **Phase 2:** determining pos$_i$ based on the KSA algorithm for generating permutation of RC4,
S is a table of n boxes indexed from 0 to n-1,
selecting a hash function h and placing K=h(w),
subsequently splitting K into packets of $\lceil \log_2 n \rceil$ bits where $\lceil . \rceil$ designates the smallest integer greater than or equal to x,
if the last packet does not contain exactly $\lceil \log_2 n \rceil$ bits, said packet must be discarded,
subsequently placing key[0] as the first packet (base 10), key[1] as the second, etc.,
let keylength be the number of packets,

for i=0 to n-1

S[i]:=i

p:=0

for i=0 to n-1

j:=(j+S[i]+key{i mod keylength]) mod n

reverse the values of S[i] and of S[j]

S finally represents a permutation of {0,…, n-1},

subsequently taking a public list of k indices and the image of each of these elements by S contains one of the required positions k.

4. The method according to claim 1, **characterised in that** the first secure sketch SS$_1$ is a generalised secure sketch.

5. The method according to any one of claims 1 to 3, **characterised in that** it comprises the use of a re-centred generalised secure sketch formed by a generalised secure sketch to which an Extend$_{Sk}^{-1}$ function has been added at the output, said re-centred generalised secure sketch being disposed at the measurement of the n-1+1 nth modality, with the n-1 measured modalities using generalised secure sketches.

**6.** The method according to claim 5, **characterised in that** it comprises at least the following steps:

let:

- n be the total number of conventional secure sketches referenced SS, generalised secure sketches referenced SSg or re-centred secure sketches referenced SSgr that are used, with only the first of the chain being a conventional secure sketch;
- 1 be the limit, which corresponds to the longest chain of SSg starting from the end and including the first SSgr;
- C be the chain of n-l+1 bits that represent the n-1 first SS (2 bits for the first conventional secure sketch SS, SSg or SSgr and 1 bit for each of the SS 2 to n-1, and

positioning an SSgr in the position n-1+1 and for all of the other blocks of SSg, gathering the data at the output of the $SSg_n$.

**7.** The method according to claim 6, **characterised in that** it comprises at least the following steps for gathering data that depend on the 1' modalities disposed before the limit 1 and that requires the multimodal authentication of the m first modalities, placing an SSgr in the position m-1'+1 and SSg in the positions m-l'+2,..., m.

**8.** The method according to claim 6, **characterised in that** it comprises at least the following steps for obtaining data that depend only on the modality m but that requires the authentication of the m first modalities: having a re-centred generalised secure sketch (SSgr) in position m, the type of the other blocks (SSg or SSgr) therefore does not have any influence on this data.

**9.** The method according to any one of claims 1 to 3, **characterised in that** it implements a crossed authentication principle comprising at least the following steps: firstly passing through the first secure sketch SS1 so as to deduce therefrom a first secret key $Sk^{(1)}$, applying said first secret key to the second modality mod2, then deriving a second secret key to be applied to the first modality mod1 so as to obtain the value of $w^{(2)}$(mod1, mod2), with the exponent (2) signifying that it is the second time that modality 1 has been used in the process.

**10.** A method for the multimodal authentication of individuals or objects, or of individuals and objects combined, with said individual or said object being characterised or associated with one or more modalities modi, with i ranging from 2 to n, **characterised in that** it comprises at least the following steps:

a) knowing a set of measurements of the n modalities and sketches corresponding to each of the modalities s(mod1), s(mod1, mod2),..., s(mod1,...modi), ..., s(mod1,...,modn),
b) a step of measuring the fuzzy or noisy data h(w'(mod1)) corresponding to a first modality mod1, where h is a hash function;
c) correcting (301) the measurement of the first modality h(w'(mod1)) by means of a generalised fuzz extractor $SS_1$, which takes as input the noisy measurement h(w'(mod1)) and the sketch s(mod1) (302) corresponding to modality 1, so as to obtain a corrected or denoised measurement h(w(mod1)) (600);
d) transforming the data h(w(mod1)) using a non-reversible transformation function so as to find a first secret key $S_k^{(1)}$, i.e. that on the basis of the knowledge of $S_k^{(1)} = [(pos_1;...;pos_k); (val_1;...;val_k)]$ it is not possible to retrieve information relating to the data w;
repeating the next steps e) to h) as long as i is less than or equal to n, the initially set number of modalities;
e) measuring an i-nth modality or h(w'(modi));
f) correcting said i-nth modality h(w'(modi)), with i being greater than or equal to 2 and less than or equal to n, the number of modalities selected for the authentication, by executing the following steps:
g) using the key $S_k^{(i-1)}$ obtained by applying the transformation function to the modality h(w'(mod1)) so as to generate extended data h(w'e(modi)) by increasing the size of the reference data with k digits corresponding to the key $S_k^{(i-1)}$;
h) determining, on the basis of the extended data h(w'e(modi)) and of the sketch s(mod1,...modi) (318), the extended denoised value h(we(mod1,...modi));
i) using the word h(we(mod1,...modn)) so as to authenticate the user or the object corresponding to the n measured modalities or so as to generate a cryptographic key.

11. The use of the method according to any one of the preceding claims to authenticate an individual on the basis of a plurality of modalities selected from the following list: the voice, the fingerprints, the iris, the retina, the face, etc., the response of PUFs, the combination of biometries and responses of PUFs or any other type of fuzzy data.

Enrôlement

## F IG. 1A

Recouvrement

## FIG 1B

Enrôlement

## F IG 2A

Recouvrement

## FIG 2 B

## FIG.3A

310

Mod$_1$

w'(mod$_1$)

s(mod$_1$) → SS$_1$

302

w(mod$_1$)

311

Transformation

S$_k$

Mod$_2$

w'(mod$_2$)

SS$_2$(généralisé) ← s(mod$_1$,mod$_2$)

306

w(mod$_1$,mod$_2$)

307

## FIG.3B

s

s

w' → Extend → w'$_e$ → ⊕ → c' → Décode → c → ⊕ → w$_e$

S$_k$

320

321

322

323

## FIG.3C

~~Mod$_1$~~

w'(mod$_1$)

s(mod$_1$) → SS$_1$

w(~~mod$_1$~~)

Transformation

~~S$_k$~~

Mod$_2$

w'(mod$_2$)

SS$_2$(généralisé) → s(mod$_1$,mod$_2$)

w(mod~~$_1$~~mod$_2$)

## FIG.4A

FIG.4B

FIG.5A

EP 2 656 534 B1

SEQ = 01010 || 01001 || 00011 || 01110
=10      =9      =3      =13

10

9

3                        3

1   2   3   4   5   6   7   8   9   10   11   12   13

13

## FIG.5B

Rétroaction    1   2   3   4   5   6   7   8   9   10   11   12   13   14   15   16   (bit n°)

| 1 | 0 | 1 | 0 | 1 | 1 | 0 | 0 | 1 | 1 | 1 | 0 | 0 | 0 | 0 | 1 |

## FIG.5C

FIG.6A

FIG.6B

FIG.7

FIG.8

Mod$_1$

① ↓

SS$_1$

② ↓ → Transformation

$S_k$ → SS$_2$(généralisé)

Mod$_2$ ↓

③ → Transformation

Mod$_1$ ↓

SS$_1$

④ ↓

w(mod$_1$,mod$_2$)

## FIG.9

Mod$_1$ ↓

w(mod$_1$) → Transformation

$S_k^{(1)}$

Mod$_2$ ↓

SS$_1$

↓

$S^{(1)}$ (mod$_1$)

SS$_{2g}$

↓

$S^{(1)}$ (mod$_2$)

w(mod$_2$) → Transformation

$S_k^{(2)}$

Mod$_1$ ↓

w(mod$_1$)

SS$_{3g}$

↓

$S^{(1)}$ (mod$_1$)

## FIG.10

Phase d'enrôlement :

$S_k$ ↓

w → Extend → w$_e$ → SS → s →

Phase de correction :

$S_k$ ↓

w' → Extend → w'$_e$ → SS

s →

w$_e$ si dist (w'$_e$- w$_e$)<t → Extend$^{-1}$ → w →

800

## FIG.11

Secure sketch généralisé

Secure sketch généralisé recentré

# FIG.12

# FIG.13

FIG.14A

FIG.14B

FIG.15A

Mod$_1$     Mod$_{n-1}$     Mod$_{n-l+1}$     Mod$_{n-l+2}$     Mod$_n$

o o o

$\underbrace{\qquad\qquad}_{SS_g}$    SS$_{gr}$    $\underbrace{\qquad\qquad}_{SS_g}$

o o o

## FIG.15B

$n$

$l$

| 1 | 2 | 3 | 4 | 5 | 6 | 7 | 8 | 9 |

$\underbrace{\qquad\qquad}_{C=00110}$

SS$_{gr}$    SS$_{g'}$

$(n,l,C)$

## FIG.15C

$l$

| 1 | 2 | 3 | 4 | 5 | 6 | 7 | 8 | 9 |

SS$_g$   SS$_g$   SS$_{gr}$   SS$_{gr}$   SS$_{gr}$

$^{w}4.5$

## FIG.16A

$l'$

$l$

| | | m-l'+1 | m-l'+2 | | | m | | | | | | |

$w_{m-l'+m}$

## FIG.16B

**PUF**

Capteurs 21

Unité de calcul 20

w (mod$_1$ ... mod$_n$)
ou
clé cryptographique

Support
d'enregistrement
S$_k$

Mémoire
de stockage
(sketches)

23

22

FIG.17

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0903699

**Littérature non-brevet citée dans la description**

- **DODIS et al.** Fuzzy extractors : How to generate strong keys from biometrics and other noisy data. *Eucrocypt,* 2004, vol. 3027, 523-540
- **STELVIO CIMATO.** Privacy-Aware Biiométrics : Design and Implementation of a Multimodal Vérification System. *Computer Security Applications Conférence,* 2008

- **YEVGENIS DODIS.** Fuzzy Extractors : How to generate Strong Keys from Biometrics and Other Noisy Data. *internet citation,* 01 Janvier 2008
- Robust Fuzzy Extractors and Authentificated Key Agreement from Close Secrets. **YEVGENIS DODIS.** advances in cryptology - crypto 2006 lecture notes in computer science. springer, 01 Janvier 2006